# EUROPÄISCHE PATENTSCHRIFT

(11) **EP 3 883 997 B1**
(45) Veröffentlichungstag und Bekanntmachung des Hinweises auf die Patenterteilung: **14.08.2024**
(21) Anmeldenummer: 19801317.9
(22) Anmeldetag: 08.11.2019
(51) Int. Cl.: C08L 67/00, C08G 77/16, C08L 33/06, C08G 18/18, C08G 18/22, C08G 18/42, C08G 18/62, C08G 18/61, C08G 18/76, C08G 18/79, C08G 77/46, C09D 175/04, B29C 37/00

(54) **SELBSTTRENNENDES IN-MOLD-COATING (IMC) ZUR BESCHICHTUNG VON SUBSTRATEN**
SELF-RELEASING IN-MOULD-COATING (IMC) FOR COATING SUBSTRATES
REVÊTEMENT DANS LE MOULE (IMC) AUTO-DEMOULABLE DESTINÉ AU REVÊTEMENT DE SUBSTRATS

(30) Priorität: 23.11.2018 EP 18208049
(43) Veröffentlichungstag der Anmeldung: 29.09.2021
(73) Patentinhaber: BASF Coatings GmbH, 48165 Münster (DE)
(72) Erfinder: REUTER, Karin, 48165 Muenster (DE); FEDELER, Lea, 48165 Muenster (DE); WINZEN, Simon, 48165 Muenster (DE)
(74) Vertreter: BASF IP Association
(86) Internationale Anmeldenummer: PCT/EP2019/080636
(87) Internationale Veröffentlichungsnummer: WO 2020/104213

(56) Entgegenhaltungen:
- JP-A- H07 329 099
- US-A1- 2005 214 559

## Beschreibung

Die vorliegende Erfindung betrifft eine Zusammensetzung, welche zur Beschichtung von Bauteilen im In-Mold-Beschichtungsverfahren geeignet ist, ein Verfahren zur Beschichtung von Bauteilen sowie die Herstellung von Bauteilen unter Verwendung dieser Zusammensetzungen.

### Stand der Technik

Die Herstellung verschiedenster Bauteile mit variablen Schichtdicken erfolgt heutzutage zumeist mittels des Spritzgussverfahrens. Bestimmte Materialien, insbesondere Schaumstoffe mit geringer Dichte, sind zur Herstellung von Bauteilen jedoch ungeeignet, weil sie Probleme hinsichtlich der Verschmutzungsneigung, der UV-Stabilität sowie der defektfreien Verarbeitung aufweisen können. Allerdings besteht gerade im Bereich der Herstellung von Schuhsohlen oder im Bereich der Möbelindustrie ein anhaltender Bedarf an derartigen Bauteilen zur Herstellung von Schuhen oder Polstermöbeln. Ein verbesserter Schutz derartiger Bauteile kann unter anderem durch eine Beschichtung erreicht werden. Die Beschichtung muss einerseits eine gute Haftung auf dem Bauteil aufweisen, andererseits jedoch ausreichend flexibel und elastisch sein, um den Einsatz der beschichteten Bauteile auch in Bereichen mit hoher mechanischer Beanspruchung zu ermöglichen.

Die Beschichtung der Bauteile erfolgt derzeit meist nach deren Herstellung, beispielsweise im Overmoulding-Verfahren oder durch nachträgliche Lackierungsverfahren. Derartige Verfahren sind jedoch ineffizient, da nach der Herstellung ein weiterer Verfahrensschritt erforderlich ist. Zudem muss vor einer weiteren Beschichtung mit beispielsweise einem Basis- und/oder Klarlack oder der Verklebung mit anderen Bauteilen das bei der Herstellung der Bauteile verwendete externe Trennmittel, welches eine beschädigungsfreie Entformung der Bauteile aus dem Formwerkzeug ermöglicht, durch aufwändige Reinigungsverfahren entfernt werden. Darüber hinaus müssen auch die verwendeten Werkzeuge laufend gereinigt werden. Weitere, mit der Verwendung externer Entformungsmittel verbundene Nachteile bestehen darin, dass häufig eine Unverträglichkeit zwischen Trennmittel und der zur Herstellung des Bauteils verwendeten Zusammensetzung und/oder Trennmittel und Formwerkzeug vorliegt, was zu Haftungsproblemen führt. Zudem erhöhen sich bei der Verwendung externer Trennmittel der Verfahrensaufwand und somit die Prozesszeiten. Des Weiteren führt der Einsatz externer Trennmittel häufig zu glänzenden Oberflächen der hergestellten Bauteile, was insbesondere in der Schuhindustrie unerwünscht ist. Darüber hinaus werden insbesondere beim Einsatz von Schäumen zur Herstellung von Bauteilen unregelmäßige Oberflächenstrukturen, insbesondere raue und auch teilweise offene Fasern oder Poren aufweisende Oberflächenstrukturen erhalten, welche sich weder durch Einsatz eines externen Trennmittels noch durch nachfolgende Beschichtung mit Beschichtungsschichten, in der Regel Füllerschichten, Basislackschichten und Klarlackschichten, vollständig beseitigen lassen.

Das Dokument JPH07329099 A1 beschreibt die Herstellung eines geformten und beschichteten Polyurethanharzprodukts in einem kurzen Zyklus durch ein Verfahren, bei welchem zunächst ein Enformungshilfsmittel auf die Form aufgetragen wird, anschließend ein Beschichtungsmittel aufgetragen wird und danach ein geformtes Polurethanharzprodukt durch ein Reaktionsspritzgussverfahren hergestellt wird. Bei dem Beschichtungsmittel handelt es sich um einen Silikonkautschuk, welcher bei 20-90°C Oberflächentemperatur der Form aushärtet und im ausgehärteten Zustand eine Oberflächenspannung von 15-25 dyne/cm aufweist.

Es ist daher wünschenswert, das Material direkt bei der Herstellung zu beschichten und auf diese Weise auf einen separaten Beschichtungsschritt zu verzichten. Ein mögliches Verfahren, mit welchem eine Beschichtung während der Herstellung der Bauteile möglich ist, ist das In-Mold-Verfahren. Bei diesem Verfahren werden zuvor in das Formwerkzeug eingelegte Substrate, wie Stoff, Papier, Holzfurnier oder beliebig bedruckte oder strukturierte Folien, hinterspritzt. Auch hier muss ein externes Trennmittel appliziert werden, um eine beschädigungsfreie Entformung der hergestellten Bauteile zu gewährleisten.

Von Vorteil wäre demnach eine Zusammensetzung, mit welcher nicht nur eine stabile und flexible Beschichtung des Bauteils erreicht werden kann, sondern welche gleichzeitig zu einer beschädigungsfreien Entformung des hergestellten Bauteils führt, so dass auf den Einsatz von externen Trennmitteln verzichtet werden kann. Weiterhin sollte die aus der Zusammensetzung resultierende Beschichtung keine unregelmäßige und/oder glänzende Oberfläche aufweisen. Zudem sollten die Zusammensetzung zu einem besseren Fließverhalten des zur Herstellung der Bauteile verwendeten Materials führen, um auf diese Weise auch komplexe Geometrien, wie Schuhsohlen oder Bauteile mit wenigen Millimeter breiten Stegen, defektfrei herstellen zu können. Darüber hinaus sollten sich die hergestellten beschichteten Bauteile ohne aufwändige Reinigungs- und/oder Schleifschritte mit handelsüblichen Basislacken und/oder Klarlacken nachbeschichten und/oder unter Verwendung von Klebstoffen verkleben lassen.

### Aufgabe und Lösung

Aufgabe der vorliegenden Erfindung war es demzufolge, ein Beschichtungsmittel bereitzustellen, welches ohne Einsatz eines externen Trennmittels eine beschädigungsfreie Entformung von der üblicherweise metallischen Werkzeugoberfläche zulässt, gleichzeitig jedoch eine hervorragende Haftung auf dem Substrat gewährleistet. Weiterhin sollten sich die Beschichtungen ohne aufwändige anschließende Reinigungsschritte und/oder Schleifschritte mit einer weiteren Lackschicht, beispielsweise einem Basislack und/oder Klarlack, nachbeschichten lassen. Insbesondere sollen auch Schaumstoffe oder andere Materialien mit poröser Oberfläche nahtlos mit hochelastischen, flexiblen Überzügen versehen werden können, welche zudem UV-beständig sind. Um kurze Prozesszeiten zu ermöglichen, sollte das Beschichtungsmittel zudem kurze Ablüftzeiten aufweisen. Zudem sollte das Beschichtungsmittel auch die Fließeigenschaften von Zusammensetzungen, welche zur Herstellung von beschichteten Bauteilen verwendet werden, verbessern, um auf diese Weise auch die Herstellung von defektfreien Bauteilen mit komplexer Geometrie zu ermöglichen.

### Lösung der Aufgabe

Es wurde gefunden, dass die genannten Aufgaben gelöst werden konnten durch eine Zusammensetzung, insbesondere Beschichtungsmittelzusammensetzung, umfassend
(a) mindestens ein Lösungsmittel L,
(b) mindestens eine Verbindung der allgemeinen Formel (I)

   R¹-(C=O)ᵣ-O-(AO)ₛ-R² (I)

   worin R¹ ein gesättigter oder ungesättigter, aliphatischer Kohlenwasserstoffrest mit 6 bis 30 Kohlenstoffatomen ist,
   R² für H steht,
   AO für einen oder mehrere Alkylenoxid-Reste gewählt aus der Gruppe bestehend aus Ethylenoxid, Propylenoxid und Butylenoxid steht,
   r = 0 oder 1 ist, und s = 0 bis 30 ist;
(c) gegebenenfalls mindestens ein polyethermodifiziertes Alkylpolysiloxan
(d) mindestens ein Polysiloxan der allgemeinen Formel (II)

   R³-Si(R⁴)₂-[O-Si(R⁴)(R⁵)]ₐ-[O-Si(R⁴)₂]_{b}-O-Si(R⁴)₂-R³ (II),

   worin
   R³ für einen Rest (HO-CH₂)₂-C(CH₂-CH₃)-CH₂-O-(CH₂)₃-* steht,
   R⁴ für eine Methylgruppe steht,
   R⁵ für eine Methylgruppe steht,
   a für 0 steht und
   b für 7 bis 14 und
(e) mindestens ein Bindemittel B,
wobei die Zusammensetzung zusätzlich mindestens ein Vernetzungsmittel V enthält.

Weiterhin wurden die Aufgaben gelöst durch ein Verfahren zur Herstellung eines beschichteten Bauteils, wobei
(A) eine erfindungsgemäße Zusammensetzung auf eine Oberfläche eines Formwerkzeugs unter Bildung einer Beschichtungsmittelschicht appliziert wird,
(B) die Beschichtungsmittelschicht abgelüftet wird,
(C) eine das Bauteil bildende Zusammensetzung auf die abgelüftete Beschichtungsmittelschicht appliziert wird,
(D) die Zusammensetzung und die Beschichtungsmittelschicht vernetzt werden und
(E) anschließend das beschichtete Bauteil entnommen wird.

Schließlich wurden die Aufgaben gelöst durch die Verwendung einer erfindungsgemäßen Zusammensetzung zur Herstellung beschichteter Bauteile, insbesondere beschichteter Schaumstoffe.

Die oben genannte Zusammensetzung wird in der Folge auch als erfindungsgemäße Zusammensetzung bezeichnet und ist dementsprechend Gegenstand der vorliegenden Erfindung. Bevorzugte Ausführungsformen der erfindungsgemäßen Zusammensetzung sind der weiter unten folgenden Beschreibung sowie den Unteransprüchen zu entnehmen.

Die erfindungsgemäße Zusammensetzung erlaubt aufgrund der geringen Ablüft- und Vernetzungszeiten nicht nur kurze Prozesszeiten, sondern führt auch zu einer beschädigungsfreien Entformung der hergestellten beschichteten Bauteile. Zudem weist diese Zusammensetzung eine hohe Haftung auf dem hergestellten Bauteil auf und erlaubt eine Nachbeschichtung mit handelsüblichen Basis- und/oder Klarlacken und/oder eine Verklebung ohne aufwändige Reinigungs- und/oder Schleifschritte. Auch ohne Nachbeschichtung ist die durch die Zusammensetzung auf dem Bauteil erhaltene Beschichtung hochelastisch bzw. flexibel sowie UV-beständig und weist einen konstanten Glanzgrad bzw. Mattgrad auf, so dass nicht nur eine beschädigungsfreie Entformung des beschichteten Bauteils, sondern auch ein effektiver Schutz des hergestellten beschichteten Bauteils gegen Umwelteinflüsse, wie UV-Strahlung, Schmutz oder dergleichen, bereits direkt nach der Herstellung, also ohne weitere Behandlung des Bauteils, erreicht wird. Weiterhin weisen die hergestellten beschichteten Bauteile selbst dann eine regelmäßige Oberfläche auf, wenn zu deren Herstellung Schäume verwendet werden, welche in Kombination mit herkömmlichen Trennmittelzusammensetzungen zu Bauteilen mit sehr unregelmäßiger Oberfläche führen. Darüber hinaus konnten auch Bauteile mit komplexen Geometrien, beispielsweise Schuhsohlen sowie Bauteile mit wenigen Millimetern breiten Stegen, ohne Defekte hergestellt werden, da die erfindungsgemäße Zusammensetzung zu einer Verbesserung des Fließverhaltens führt. Auf diese Weise werden auch komplexe Geometrien vollständig mit der Zusammensetzung ausgefüllt. Da nur geringe Rückstände der Zusammensetzung in dem Formwerkzeug verbleiben, müssen die verwendeten Formwerkzeuge nicht vor jeder erneuten Applikation der Zusammensetzung gereinigt werden.

### Ausführliche Beschreibung

### Definitionen:

Zunächst seien einige im Rahmen der vorliegenden Erfindung verwendeten Begriffe erläutert.

Der Begriff "polyethermodifizietes Alkylpolysiloxan" steht erfindungsgemäß für ein Alkylpolysiloxan, welches an den terminalen Enden und/oder in der Hauptkette mit Polyethergruppen modifiziert ist. Die Polyethergruppen können hierbei direkt und/oder über eine Alkylgruppe an das Siliziumatom des Alkylpolysiloxan gebunden sein. Bevorzugt sind die Polyethergruppen direkt an das Siliziumatom des Alkylpolysiloxans gebunden. Als Polyethergruppen sind bevorzugt Ethylenoxid-, Propylenoxid- und Butylenoxidgruppen enthalten.

Unter dem Begriff "Bindemittel" werden im Sinne der vorliegenden Erfindung in Einklang mit der DIN EN ISO 4618 (deutsche Fassung, Datum: März 2007) vorzugsweise die für die Filmbildung verantwortlichen nicht-flüchtigen Anteile der erfindungsgemäßen Zusammensetzung mit Ausnahme von darin gegebenenfalls enthaltenen Pigmenten und Füllstoffen verstanden, insbesondere die für die Filmbildung verantwortlichen polymeren Harze. Der nicht-flüchtige Anteil kann gemäß der im Beispielteil beschriebenen Methode bestimmt werden.

Der Begriff "Poly(meth)acrylat" steht sowohl für Polyacrylate als auch für Polymethacrylate. Poly(meth)acrylate können daher aus Acrylaten und/oder Methacrylaten aufgebaut sein und weitere ethylenisch ungesättigte Monomere enthalten, wie beispielsweise Styrol oder Acrylsäure.

Der Begriff "aliphatischer Rest" steht für einen Rest einer acyclischen oder cyclischen, gesättigten oder ungesättigten Kohlenstoffverbindung, wobei dieser Rest keine aromatischen Strukturen enthält. Aliphatische Reste können dementsprechend aber Heteroatome, wie beispielsweise Sauerstoff oder Stickstoff, enthalten.

Unter einem Bauteil wird erfindungsgemäß ein Einzelteil verstanden, welches mit anderen Bauteilen verbunden eine Baugruppe bildet. Handelt es sich beim Bauteil also um das Teil einer Karosserie, beispielsweise eines Kraftfahrzeugs, so kann dieses mit anderen Karosseriebauteilen zu einer Karosserie zusammengefügt werden. Handelt es sich beim Bauteil beispielsweise um eine Schuhsohle, so kann diese mit anderen Bauteilen eines Schuhs zu einem solchen zusammengefügt werden. Allgemein betrifft die Erfindung jedoch unabhängig vom Zweck des Materials als Bauteil dienen zu können, generell die Herstellung beschichteter Bauteile und ist somit nicht auf Bauteile im obigen Sinne beschränkt. Ist daher im Folgenden von der Beschichtung von Bauteilen die Rede, so umfasst dies allgemein auch die Beschichtung von Materialien ohne "Bauteilfunktion", d.h. derartige Materialien müssen nicht zwangsläufig als Bauteil zur Herstellung von Baugruppen verwendet werden.

Unter einem beschichteten Bauteil wird erfindungsgemäß ein Bauteil verstanden, welches an der Oberfläche mit einer Beschichtung versehen ist. Die Beschichtung wird durch Vernetzung der erfindungsgemäßen Zusammensetzung während der Herstellung des Bauteils auf dessen Oberfläche aufgebracht. Bei der Beschichtung des Bauteils handelt es sich folglich um die vernetzte erfindungsgemäße Zusammensetzung.

Unter Ablüften der erfindungsgemäßen Zusammensetzung wird das Verdunsten beziehungsweise Verdunsten lassen von Lösemitteln L der Zusammensetzung, meist bei gegenüber der Umgebungstemperatur erhöhter Temperatur von beispielsweise 40 bis 90°C, verstanden. Während des Ablüftens verdunsten also Lösemittel L, welche in der aufgebrachten Zusammensetzung enthalten sind. Da die Zusammensetzung jedenfalls direkt nach dem Auftragen und zu Beginn des Ablüftens noch fließfähig ist, kann sie während des Ablüftens verlaufen. Denn zumindest eine durch Spritzapplikation aufgetragene Zusammensetzung wird in der Regel tröpfchenförmig und nicht in homogener Dicke aufgetragen. Sie ist aber durch die enthaltenen Lösemittel L fließfähig und kann somit durch das Verlaufen einen homogenen, glatten Beschichtungsfilm bilden. Gleichzeitig verdunsten Lösemittel L sukzessive, sodass nach der Ablüftphase eine vergleichsweise glatte Schicht der Zusammensetzung auf der Oberfläche entstanden ist, welche im Vergleich zur aufgebrachten Zusammensetzung weniger Lösemittel L enthält. Diese Schicht liegt nach dem Ablüften aber noch nicht im gebrauchsfertigen Zustand vor. Sie ist zwar beispielsweise nicht mehr fließfähig, aber noch weich beziehungsweise klebrig, gegebenenfalls lediglich angetrocknet. Insbesondere ist diese Schicht noch nicht vernetzt.

Unter Vernetzung wird die Härtung der erfindungsgemäßen Zusammensetzung sowie der das Bauteil bildenden Zusammensetzung, also die Überführung dieser Zusammensetzungen in den gebrauchsfertigen Zustand, das heißt also in einen Zustand, in der das mit der Zusammensetzung ausgestattete Bauteil transportiert, gelagert und bestimmungsgemäß verwendet werden kann. Eine vernetzte Zusammensetzung sowie ein vernetztes Bauteil ist also insbesondere nicht mehr weich oder klebrig, sondern als fester Beschichtungsfilm bzw. als festes Bauteil konditioniert. Der Film bzw. das Bauteil ändert auch bei weiterer Aussetzung mit wie weiter unten beschriebenen Vernetzungsbedingungen seine Eigenschaften wie Härte oder Haftung auf dem Untergrund nicht mehr wesentlich.

Erfindungsgemäße Zusammensetzungen sowie die zur Herstellung des Bauteils verwendeten Zusammensetzungen können grundsätzlich physikalisch und/oder chemisch gehärtet werden, je nach enthaltenen Komponenten wie Bindemitteln und Vernetzungsmitteln. Insbesondere werden die Zusammensetzungen chemisch gehärtet. Bei der chemischen Härtung kommen die thermisch-chemische Härtung und die aktinisch-chemische Härtung in Betracht. Die erfindungsgemäße Zusammensetzung sowie die zur Herstellung von Bauteilen verwendeten Zusammensetzungen können, sofern sie thermisch-chemisch härtbar sind, selbst- und/oder fremdvernetzend sein. Unter der Angabe selbst- und/oder fremdvernetzend ist im Rahmen der vorliegenden Erfindung zu verstehen, dass Polymere (auch Polymerisate genannt) als Bindemittel und gegebenenfalls Vernetzungsmittel enthalten sind, welche entsprechend miteinander vernetzen können. Die zugrunde liegenden Mechanismen sowie einsetzbaren Bindemittel und Vernetzungsmittel (filmbildende Komponenten) werden weiter unten beschrieben.

Im Rahmen der vorliegenden Erfindung bedeutet "thermisch-chemisch härtbar" beziehungsweise der Begriff "thermisch-chemische Härtung" die durch chemische Reaktion von reaktiven funktionellen Gruppen initiierte Vernetzung der Zusammensetzung (Bildung einer gehärteten Zusammensetzung), wobei die energetische Aktivierung dieser chemischen Reaktion durch thermische Energie möglich ist. Dabei können unterschiedliche funktionelle Gruppen, die zueinander komplementär sind, miteinander reagieren (komplementäre funktionelle Gruppen) und/oder die Bildung der gehärteten Zusammensetzung beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeile 24, bekannt.

Bei dieser Vernetzung kann es sich um eine Selbstvernetzung und/oder eine Fremdvernetzung handeln. Sind beispielsweise die komplementären reaktiven funktionellen Gruppen bereits in einem als Bindemittel eingesetzten organischen Polymer, beispielsweise einem Polyester, einem Polyurethan oder einen Poly(meth)acrylat vorhanden, liegt eine Selbstvernetzung vor. Eine Fremdvernetzung liegt beispielsweise vor, wenn ein (erstes) organisches Polymer oder eine erste Verbindung enthaltend bestimmte funktionelle Gruppen, beispielsweise Hydroxylgruppen, mit einem an sich bekannten Vernetzungsmittel, beispielsweise einem Polyisocyanat und/oder einem Melaminharz, reagiert. Das Vernetzungsmittel enthält also reaktive funktionelle Gruppen, welche zu den in dem als Bindemittel eingesetzten (ersten) organischen Polymer vorhandenen reaktiven funktionellen Gruppen komplementär sind.

Insbesondere im Fall der Fremdvernetzung kommen die an sich bekannten Mehrkomponentensysteme, insbesondere Zweikomponentensysteme, in Betracht. In diesen Systemen liegen die zu vernetzenden Komponenten, beispielsweise die organischen Polymere als Bindemittel und die Vernetzungsmittel, getrennt voneinander in mindestens zwei Komponenten vor, welche erst kurz vor der Applikation zusammengegeben werden. Diese Form wird dann gewählt, wenn die zu vernetzenden Komponenten bereits bei Umgebungstemperaturen oder leicht erhöhten Temperaturen von beispielsweise 40 bis 90°C effektiv miteinander reagieren. Als beispielhafte Kombination seien hydroxyfunktionelle Polyester und/oder Polyurethane und/oder Poly(meth)acrylate mit freien Polyisocyanaten als Vernetzungsmittel genannt.

Es ist auch möglich, dass ein organisches Polymer als Bindemittel sowohl selbstvernetzende als auch fremdvernetzende funktionelle Gruppen aufweist und dann mit Vernetzungsmitteln kombiniert wird.

Im Rahmen der vorliegenden Erfindung ist unter "aktinisch-chemisch härtbar" beziehungsweise dem Begriff "aktinisch-chemische Härtung" die Tatsache zu verstehen, dass die Härtung unter Anwendung aktinischer Strahlung, nämlich elektromagnetischer Strahlung wie nahes Infrarot (NIR) und UV-Strahlung, insbesondere UV-Strahlung, sowie Korpuskularstrahlung wie Elektronenstrahlung möglich ist. Die Härtung durch UV-Strahlung wird üblicherweise durch radikalische oder kationische Photoinitiatoren initiiert. Typische aktinisch härtbare funktionelle Gruppen sind Kohlenstoff-Kohlenstoff-Doppelbindungen, wobei hierbei in der Regel radikalische Photoinitiatoren zum Einsatz kommen. Der aktinischen Härtung liegt also ebenfalls eine chemische Vernetzung zugrunde.

Selbstverständlich wird bei der Härtung einer als chemisch härtbar gekennzeichneter Zusammensetzung immer auch eine physikalische Härtung, das heißt eine Verschlaufung von Polymerketten, auftreten. Die physikalische Härtung kann sogar den überwiegenden Anteil ausmachen. Trotzdem wird eine solche Zusammensetzung, sofern es zumindest anteilig filmbildende Komponenten enthält, die chemisch härtbar sind, als chemisch härtbar bezeichnet.

Aus Obigem folgt, dass je nach Art des Beschichtungsmittels und den darin enthaltenen Komponenten eine Härtung durch unterschiedliche Mechanismen bewirkt wird, die selbstverständlich auch unterschiedliche Bedingungen bei der Härtung notwendig machen, insbesondere unterschiedliche Härtungstemperaturen und Härtungsdauern.

Alle im Rahmen der vorliegenden Erfindung erläuterten Temperaturen verstehen sich als Temperatur des Formwerkzeugs, in welchem sich die Zusammensetzungen befinden. Gemeint ist also nicht, dass die Zusammensetzungen selbst die entsprechende Temperatur aufweisen müssen.

Die im Rahmen der vorliegenden Erfindung anzuwendenden Messmethoden zur Bestimmung bestimmter Kenngrößen sind dem Beispielteil zu entnehmen. Sofern nicht explizit anders angegeben, sind diese Messmethoden zur Bestimmung der jeweiligen Kenngröße einzusetzen. Wird im Rahmen der vorliegenden Erfindung auf eine offizielle Norm ohne Hinweis auf den offiziellen Gültigkeitszeitraum verwiesen, ist hiermit selbstverständlich die zum Anmeldetag geltende Fassung der Norm oder, falls zu diesem Zeitpunkt keine geltende Fassung besteht, die letzte geltende Fassung gemeint.

### Erfindungsgemäße Zusammensetzung:

Bei der erfindungsgemäßen Zusammensetzung handelt es sich bevorzugt um eine selbsttrennende Beschichtungsmittelzusammensetzung.

Die erfindungsgemäße Zusammensetzung besitzt vorzugsweise einen Festkörper von 30 bis 60 Gew.-%, bevorzugt von 35 bis 55 Gew.-%, besonders bevorzugt von 40 bis 50 Gew.-%, insbesondere von 42 bis 48 Gew.-%, bezogen auf das Gesamtgewicht der Zusammensetzung. Der Gehalt des Festkörpers wurde gemäß ASTM D2369 (2015) bei 110 °C für 60 min an einer Probe von 2 Gramm der Zusammensetzung bestimmt.

Darüber hinaus ist es erfindungsgemäß bevorzugt, wenn die Zusammensetzung eine Viskosität von 10 bis 60 s, insbesondere von 20 bis 30 s (DIN4 Auslaufbecher), gemessen gemäß DIN EN ISO 2431 (März 2012), aufweist. Die Einstellung einer niedrigen Viskosität erleichtert die Applikation der Zusammensetzung und stellt daher eine ausreichende Benetzung des Formwerkzeugs sowie eine homogene Beschichtung des Bauteils sicher.

### Lösungsmittel L:

Als ersten wesentlichen Bestandteil enthält die erfindungsgemäße Zusammensetzung mindestens ein Lösungsmittel L.

Bei der erfindungsgemäßen Zusammensetzung kann es sich um eine lösungsmittelbasierte oder um eine wässrige Zusammensetzung handeln. Im Falle einer lösungsmittelbasierten Zusammensetzung sind als Hauptbestandteil organische Lösungsmittel enthalten. Organische Lösemittel stellen flüchtige Bestandteile der erfindungsgemäßen Zusammensetzung dar, welche beim Trocknen beziehungsweise Ablüften ganz oder teilweise verdampfen. Wässrige Zusammensetzungen enthalten Wasser als Hauptbestandteil.

Erfindungsgemäß bevorzugt ist das mindestens eine Lösungsmittel L ausgewählt aus organischen Lösungsmitteln, Wasser sowie deren Mischungen und in einer Gesamtmenge von 40 bis 70 Gew.-%, besonders bevorzugt 45 bis 65 Gew.-% und ganz besonders bevorzugt 50 bis 60 Gew.-%, insbesondere 52 bis 58 Gew.-%, jeweils bezogen auf das Gesamtgewicht der Zusammensetzung, enthalten.

Im Rahmen der vorliegenden Erfindung bevorzugte organische Lösemittel sind aprotisch. Besonders bevorzugt handelt es sich um polare aprotische organische Lösemittel. Ganz besonders bevorzugt verhalten sich die organischen Lösemittel chemisch inert gegenüber den restlichen Bestandteilen der Zusammensetzung.

Bevorzugte organische Lösemittel sind im Rahmen der vorliegenden Erfindung beispielsweise Ketone wie Aceton, Methylethylketon, Cyclohexanon, Methylisobutylketon, Methylisoamylketon oder Diisobutylketon; Ester wie Ethylacetat, n-Butylacetat, Ethylenglykoldiacetat, Butyrolacton, Diethylcarbonat, Propylencarbonat, Ethylencarbonat, 2-Methoxypropylacetat (MPA) und Ethylethoxypropionat; Amide wie N,N-Dimethylformamid, N,N-Dimethylacetamid, N-Methylpyrrolidon und N-Ethylpyrrolidon; Methylal, Butylal, 1,3-Dioxolan, Glycerolformal; und etwas weniger bevorzugt, da diese unpolar sind, Kohlenwasserstoffe wie Benzol, Toluol, n-Hexan, Cyclohexan und Solventnaphtha. Ganz besonders bevorzugte Lösemittel gehören der Klasse der Ester an, worunter ganz besonders bevorzugt n-Butylacetat und 1-Methoxypropylacetat zu nennen sind.

### Verbindung der allgemeinen Formel (I) (b):

Als zweiten wesentlichen Bestandteil enthält die erfindungsgemäße Zusammensetzung mindestens eine Verbindung der Formel (I):

R¹-(C=O)ᵣ-O-(AO)ₛ-R² (I)

worin R¹ ein gesättigter oder ungesättigter, aliphatischer Kohlenwasserstoffrest mit 6 bis 30, vorzugsweise 8 bis 26, besonders bevorzugt 10 bis 24 und ganz besonders bevorzugt 12 bis 24 Kohlenstoffatomen ist,
R² für H steht,
AO für einen oder mehrere Alkylenoxid-Reste gewählt aus der Gruppe bestehend aus Ethylenoxid, Propylenoxid und Butylenoxid steht,
r = 0 oder 1 ist, und
s = 0 bis 30, vorzugsweise 1 bis 25 oder 2 bis 25, besonders bevorzugt 4 bis 22 oder 6 bis 20 und ganz besonders bevorzugt 8 bis 18 ist.

Bei dem Rest R¹ handelt es sich vorzugsweise um einen acyclischen Rest.

Die Reste AO können gleich oder verschieden sein und innerhalb der s Reste statistisch, blockartig oder gradientenartig angeordnet sein. Sind mehrere verschiedene Arten AO enthalten, so ist es bevorzugt, wenn der Anteil an Ethylenoxid mehr als 50 mol-%, besonders bevorzugt mindestens 70 mol-% und ganz besonders bevorzugt mindestens 90 mol-%, bezogen auf die Gesamtstoffmenge der Reste AO, beträgt. Vorzugsweise sind in den vorgenannten Fällen die von Ethylenoxid verschiedenen Reste Propylenoxid-Reste.

Ist r = 0 und s > 0, so handelt es sich bei den Spezies der Formel (I) um alkoxylierte Fettalkohole, vorzugsweise ethoxylierte Fettalkohole. Ist r = 1 und s > 0, so handelt es sich bei den Spezies der Formel (I) um alkoxylierte Fettsäuren, vorzugsweise ethoxylierte Fettsäuren.

Besonders bevorzugt gilt, dass für einen Teil oder alle Spezies der Formel (I) s = 2 bis 25, besser noch 6 bis 20 und am besten 8 bis 18 ist. Besonders bevorzugt steht R¹ in diesem Fall für einen gesättigten oder ungesättigten, aliphatischen Kohlenwasserstoffrest mit 10 bis 24 Kohlenstoffatomen.

Insbesondere können auch Mischungen von Spezies der Formel (I) eingesetzt werden, in welchen für mindestens eine Spezies s = 0 gilt und für mindestens eine weitere Spezies s > 0, vorzugsweise 1 bis 25 oder 2 bis 25, besonders bevorzugt 4 bis 22 oder 6 bis 20 und ganz besonders bevorzugt 8 bis 18 gilt.

Besonders bevorzugt steht in der allgemeinen Formel (I) R¹ für einen gesättigten oder ungesättigten, aliphatischen Kohlenwasserstoffrest mit 10 bis 24 Kohlenstoffatomen, R² für H, AO für einen oder mehrere Alkylenoxid-Reste gewählt aus der Gruppe bestehend aus Ethylenoxid und Propylenoxid, r = 0 oder 1 und s = 0 oder 1 bis 25.

Weiterhin besonderes bevorzugt steht in der allgemeinen Formel (I) R¹ für einen gesättigten oder ungesättigten, aliphatischen Kohlenwasserstoffrest mit 10 bis 24 Kohlenstoffatomen, R² für H, AO für einen oder mehrere Alkylenoxid-Reste gewählt aus der Gruppe bestehend aus Ethylenoxid und Propylenoxid und der Ethylenoxidanteil an der Gesamtstoffmenge der Reste AO mindestens 70 mol-% beträgt, r = 0 oder 1 und s = 0 oder s = 6 bis 20.

Ganz besonders bevorzugt handelt es sich um Mischungen, welche die obengenannten alkoxylierten Fettalkohole mit s > 0 und/oder die obengenannten alkoxylierten Fettsäuren mit s > 0 enthalten und wenigstens eine weitere Spezies gewählt aus der Gruppe umfassend
Fettalkohole mit r = s = 0 und R² = H und
Fettsäuren mit r = 1, s = 0 und R² = H.

Das Gesamtgewicht der Verbindung der allgemeinen Formel (I) beträgt vorzugsweise 0,1 bis 10 Gew.-%, besonders bevorzugt 0,5 bis 5 Gew.-%, insbesondere 1,5 bis 4 Gew.-%, jeweils bezogen auf das Gesamtgewicht der Zusammensetzung. Wird mehr als eine Verbindung der Formel (I) eingesetzt, so beziehen sich die zuvor angegebenen Mengenangaben auf die Gesamtmenge aller Verbindungen, welche unter die Formel (I) fallen. Wird die Verbindung der Formel (I) auf eine bestimmte Verbindung (I-1) beschränkt, so beziehen sich die zuvor angegebenen Mengen nicht lediglich auf die bestimmte Verbindung (I-1), sondern auf die Gesamtmenge an Verbindungen, welche unter die Formel (I) fallen. Wird beispielsweise die bestimmte Verbindung (I-1) in einer Menge von 5 Gew.-% eingesetzt, so können maximal 5 Gew.-% weiterer Verbindungen, welche unter die Formel (I) fallen, in der erfindungsgemäßen Zusammensetzung enthalten sein.

### Polyethermodifizierte Alkylpolysiloxan (c):

Die erfindungsgemäße Zusammensetzung kann weiterhin mindestens ein polyethermodifiziertes Alkylpolysiloxan enthalten. Der Einsatz derartiger Siloxane führt zu einer verminderten Anschmutzung der beschichteten Bauteile.

Bevorzugt umfasst das polyethermodifizierte Alkylpolysiloxan mindestens eine Struktureinheit (R⁷)₂(OR⁶)SiO_{1/2} und mindestens eine Struktureinheit (R⁷)₂SiO_{2/2}, wobei R⁶ für eine Ethylenoxid-, Propylenoxid- und Butylenoxidgruppe, insbesondere eine Mischung von Ethylenoxid- und Propylenoxid- und Butylenoxidgruppen und R⁷ für eine C₁-C₁₀-Alkylgruppe, insbesondere eine Methylgruppe, steht, umfasst.

In diesem Zusammenhang ist es bevorzugt, wenn das polyethermodifizierte Alkylpolysiloxan ein molares Verhältnis von Siloxan : Ethylenoxidgruppen : Propylenoxidgruppen : Butylenoxidgruppen 6 : 21 : 15 : 1 bis 67 : 22 : 16 : 1 aufweist.

Darüber hinaus ist es in diesem Zusammenhang bevorzugt, wenn das polyethermodifizierte Alkylpolysiloxan ein molares Verhältnis der Struktureinheit (R⁷)₂(OR⁶)SiO_{1/2} zu der Struktureinheit (R⁷)₂SiO_{2/2} von 1 : 10 bis 1 : 15, insbesondere von 1 : 10 bis 1 : 13, aufweist. R⁶ und R⁷ weisen hierbei die zuvor angeführten Bedeutungen auf.

Die Zusammensetzung kann 0 Gew.-% oder 0,1 bis 6 Gew.-%, bevorzugt 0,5 bis 4 Gew.-%, insbesondere 0,8 bis 3 Gew.-%, jeweils bezogen auf das Gesamtgewicht der Zusammensetzung, an polyethermodifizierten Alkypolysiloxanen, insbesondere der zuvor angeführten speziellen polyethermodifizierten Alkylpolysiloxanen, enthalten. Die Abwesenheit derartiger Verbindungen führt zu einer geringeren Klebrigkeit der Zusammensetzung. Dadurch wird eine bessere Entformungswirkung des hergestellten beschichteten Bauteils von dem Formwerkzeug erreicht.

### Polysiloxan der Formel (II) (d):

Die erfindungsgemäße Zusammensetzung enthält weiterhin mindestens ein Polysiloxan der allgemeinen Formel (II)

R³-Si(R⁴)₂-[O-Si(R⁴)(R⁵)]ₐ-[O-Si(R⁴)₂]_{b}-O-Si(R⁴)₂-R³ (II),

worin
R³ für einen Rest (HO-CH₂)₂-C(CH₂-CH₃)-CH₂-O-(CH₂)₃-* steht,
R⁴ für eine Methylgruppe steht,
R⁵ für eine Methylgruppe steht,
a für 0 steht und
b für 7 bis 14.

Der Rest (HO-CH₂)₂-C(CH₂-CH₃)-CH₂-O-(CH₂)₃-* ist hierbei über das *-Symbol an das Siliziumatom gebunden.

Erfindungsgemäß vorteilhaft enthält die Zusammensetzung das mindestens eine Polysiloxan der Formel (II), insbesondere die zuvor angeführten speziellen Polysiloxane, in einer bestimmten Gesamtmenge. Es ist daher erfindungsgemäß bevorzugt, wenn die Zusammensetzung das mindestens eine Polysiloxan der allgemeinen Formel (II) in einer Gesamtmenge von 0,1 bis 5 Gew.-%, bevorzugt 0,5 bis 4 Gew.-%, insbesondere 0,8 bis 2,5 Gew.-%, jeweils bezogen auf das Gesamtgewicht der Zusammensetzung, enthält. Wird mehr als ein Polysiloxan der Formel (II) eingesetzt, so beziehen sich die zuvor angegebenen Mengenangaben auf die Gesamtmenge aller Polysiloxane, welche unter die Formel (II) fallen. Wird das Polysiloxan der Formel (II) auf bestimmte Polysiloxane (II-1) beschränkt, so beziehen sich die zuvor angegebenen Mengen nicht lediglich auf die bestimmten Polysiloxane (II-1), sondern auf die Gesamtmenge an Polysiloxanen, welche unter die Formel (II) fallen. Werden beispielsweise die bestimmten Polysiloxane (II-1) in einer Menge von 2 Gew.-% eingesetzt, so können maximal 3 Gew.-% weiterer Polysiloxane, welche unter die Formel (II) fallen, in der erfindungsgemäßen Zusammensetzung enthalten sein.

### Bindemittel B (e):

Erfindungsgemäß enthält die Zusammensetzung neben den zuvor beschriebenen wesentlichen Bestandteilen mindestens ein Bindemittel B. Der Einsatz dieses Bindemittels B führt zu einer Ausbildung einer flexiblen und beständigen Beschichtung auf dem Bauteil, ohne jedoch die Entformbarkeit des Bauteils negativ zu beeinflussen.

Überraschenderweise hat sich gezeigt, dass die Art des Bindemittels B unwesentlich für die mit der erfindungsgemäßen Zusammensetzung erreichte Entformbarkeit ist. Weiterhin war es überraschend, dass die erfindungsgemäße Zusammensetzung unabhängig vom Bindemittel B keinen negativen Einfluss auf die erhaltene Beschichtung, insbesondere deren Oberflächenbeschaffenheit und Flexibilität, aufweist. Die erfindungsgemäße Zusammensetzung kann daher mit beliebigen Bindemitteln B kombiniert werden, ohne dass die Entformbarkeit des hergestellten Bauteils oder die hervorragenden Eigenschaften der mit der Zusammensetzung auf dem Bauteil hergestellten Beschichtung negativ beeinflusst werden. Zudem können die resultierenden Beschichtungen ohne aufwändige Nachbehandlungsschritte verklebt und/oder mit Basis- und/oder Klarlacken beschichtet werden.

Das mindestens eine Bindemittel B ist bevorzugt in einer Gesamtmenge (Feststoffgehalt) von 20 bis 50 Gew.-%, vorzugsweise von 25 bis 40 Gew.-%, insbesondere von 25 bis 35 Gew.-%, jeweils bezogen auf das Gesamtgewicht der Zusammensetzung, enthalten. Für die Berechnung der zuvor angeführten Gesamtmengen wird jeweils der Feststoffgehalt des Bindemittels berücksichtigt, falls es sich bei dem Bindemittel um eine Dispersion oder Lösung in einem Lösungsmittel handelt. Der Einsatz des mindestens einen Bindemittels B in den zuvor angeführten Mengenbereichen stellt die Ausbildung einer flexiblen und beständigen Beschichtung auf dem Bauteil sicher, ohne jedoch die Entformbarkeit des Bauteils negativ zu beeinflussen.

Erfindungsgemäß bevorzugt ist das Bindemittel B ausgewählt aus der Gruppe bestehend aus (i) Poly(meth)acrylaten, insbesondere hydroxyfunktionellen und/oder carboxylatfunktionellen und/oder aminfunktionellen Poly(meth)acrylaten, (ii) Polyurethanen, insbesondere hydroxyfunktionellen und/oder carboxylatfunktionellen und/oder aminfunktionellen Polyurethanen, (iii) Polyestern, insbesondere Polyesterpolyolen, (iv) Polyethern, insbesondere Polyetherpolyolen, (v) Mischpolymerisaten der genannten Polymere sowie (vi) deren Mischungen.

In diesem Zusammenhang ist es bevorzugt, wenn das Bindemittel B ausgewählt ist aus hydroxyfunktionellen Poly(meth)acrylaten und/oder Polyesterpolyolen, insbesondere aus einer Mischung mindestens eines hydroxyfunktionellen Poly(meth)acrylats und mindestens eines Polyesterpolyols. Der Einsatz dieser Mischung führt zu Beschichtungen, welche ein hohe Flexibilität sowie eine gute Beständigkeit gegen Umwelteinflüsse aufweisen. Zudem wird unabhängig von der Oberflächenbeschaffenheit des zur Herstellung des Bauteils verwendeten Materials eine glatte Oberfläche erreicht. Darüber hinaus lässt sich die erhaltene Beschichtung ohne aufwändige Nachbehandlung verkleben und/oder mit Basis- und/oder Klarlacken beschichten.

Vorzugsweise besitzt das hydroxyfunktionelle Poly(meth)acrylat eine Hydroxylzahl von 65 bis 100 mg KOH/g, besonders bevorzugt 70 bis 95 mg KOH/g und ganz besonders bevorzugt 75 bis 90 mg KOH/g oder 80 bis 85 mg KOH/g. Die Hydroxylzahl lässt sich im Rahmen der vorliegenden Erfindung gemäß EN ISO 4629-2:2016 bestimmen und ist jeweils auf den Feststoffgehalt bezogen.

Das hydroxyfunktionelle Poly(meth)acrylat besitzt vorzugsweise eine Säurezahl kleiner 25 mg KOH/g, besonders bevorzugt eine Säurezahl von 1 bis 20 mg KOH/g, ganz besonders bevorzugt eine Säurezahl von 4 bis 16 mg KOH/g, insbesondere 6 bis 14 mg KOH/g oder 8 bis 12 mg KOH/g. Die Säurezahl lässt sich im Rahmen der vorliegenden Erfindung gemäß DIN EN ISO 2114:2002-06 (Verfahren A) bestimmen und ist jeweils auf den Feststoffgehalt bezogen.

Das zahlenmittlere Molekulargewicht Mₙ und das gewichtsmittlere Molekulargewicht M_{w} lassen sich mittels Gelpermeationschromatographie (GPC) unter Verwendung eines Polymethylmethacrylat-Standards (PMMA-Standard) bestimmen (DIN 55672-1:2016-03). Das zahlenmittlere Molekulargewicht Mₙ des hydroxyfunktionellen Poly(meth)acrylats liegt vorzugsweise in einem Bereich von 4000 bis 10000 g/mol, besonders bevorzugt 5000 bis 9000 g/mol und ganz besonders bevorzugt 5500 bis 8000 g/mol wie insbesondere 6000 bis 7500 g/mol. Das gewichtsmittlere Molekulargewicht M_{w} des hydroxyfunktionellen Poly(meth)acrylats liegt vorzugsweise in einem Bereich von 8000 bis 30000 g/mol, besonders bevorzugt 10000 bis 25000 g/mol und ganz besonders bevorzugt 12000 bis 22000 g/mol wie insbesondere 14000 bis 20000 g/mol.

Die Polydispersität P_{D} (= M_{w}/Mₙ) des hydroxyfunktionellen Poly(meth)acrylats liegt vorzugsweise im Bereich von 2 bis 3, besonders bevorzugt von 2,2 bis 2,8.

Das hydroxyfunktionelle Poly(meth)acrylat besitzt vorzugsweise eine Hydroxylfunktionalität von 5 bis 15, besonders bevorzugt 6 bis 14, ganz besonders bevorzugt 8 bis 12.

Das hydroxyfunktionellen Poly(meth)acrylat lässt sich mittels der dem Durchschnittsfachmann geläufigen und gängigen Polymerisationsreaktionen aus ethylenisch ungesättigten, vorzugsweise monoethylenisch ungesättigten Monomeren erhalten. Als Initiatoren lassen sich beispielsweise Peroxide wie Di-tert.-Butylperoxid einsetzen. Es ist daher bevorzugt, wenn das hydroxyfunktionelle Poly(meth)acrylat herstellbar ist durch Umsetzung von
(a1) mindestens einem hydroxyfunktionellen (Meth)acrylsäureester, insbesondere (Meth)acrylsäureester der Formel HC=CR^{x}-COO-R^{y}-OH, worin R^{x} für H oder CH₃ steht und R^{y} für einen Alkylenrest mit 2 bis 6, vorzugsweise 2 bis 4, besonders bevorzugt 2 oder 3, Kohlenstoffatomen steht,
(a2) mindestens einem carboxyfunktionellen ethylenisch ungesättigten Monomer, insbesondere (Meth)acrylsäure, und
(a3) mindestens einem hydroxylgruppenfreien und carboxylgruppenfreien Ester der (Meth)acrylsäure und/oder mindestens einem hydroxylgruppenfreien und carboxylgruppenfreien Vinylmonomeren, insbesondere Styrol.

Beispiele für hydroxyfunktionelle (Meth)acrylsäureester (a1) sind vorzugsweise Hydroxyethylmethacrylat, Hydroxyethylacrylat, Hydroxypropylmethacrylat und Hydroxypropylacrylat, besonders bevorzugt sind Hydroxyethylmethacrylat und 2-Hydroxypropylmethacrylat. Die bei der Herstellung des hydroxyfunktionellen Poly(meth)acrylats eingesetzte Menge an hydroxyfunktionellen (Meth)acrylsäureestern (a1) bemisst sich am Zielbereich für die Hydroxylzahl von 50 bis 120 mg KOH/g.

Vorzugsweise enthält das hydroxyfunktionelle Poly(meth)acrylat geringe Mengen an Carboxylgruppen. Diese werden bei der Polymerisationsreaktion vorzugsweise durch Einsatz carboxyfunktioneller Monomere (a2), besonders bevorzugt durch Einsatz von Arcylsäure und/oder Methacrylsäure in das Poly(meth)acrylat eingeführt. Diese Monomere (a2), insbesondere (Meth)acrylsäure, sind vorzugsweise in einer Gesamtmenge von 20 bis 45 Gew.-%, bevorzugt von 25 bis 40 Gew.-%, insbesondere von 30 bis 35 Gew.-%, jeweils bezogen auf das Gesamtgewicht aller zur Herstellung des hydroxyfunktionellen Poly(meth)acrylats eingesetzten Monomere, enthalten.

Neben den hydroxyfunktionellen (a1) und den carboxyfunktionellen (a2) ethylenisch ungesättigten Monomeren werden auch ethylenisch ungesättigte, insbesondere monoethylenisch ungesättigte, Monomere (a3) bei der Herstellung des hydroxyfunktionellen Poly(meth)acrylats eingesetzt, welche sowohl hydroxylgruppenfrei als auch carboxylgruppenfrei sind. Besonders bevorzugt wird als Vinylmonomer (a3) Styrol eingesetzt. Das Vinylmonomer (a3), insbesondere Styrol, ist bevorzugt einer Gesamtmenge von 30 bis 60 Gew.-%, vorzugsweise von 35 bis 55 Gew.-%, insbesondere von 40 bis 50 Gew.-%, jeweils bezogen auf das Gesamtgewicht aller zur Herstellung des hydroxyfunktionellen Poly(meth)acrylats eingesetzten Monomere, enthalten.

Das hydroxyfunktionelle Poly(meth)acrylat kann in einem organischen Lösemittel, vorzugsweise einem aprotischen Lösemittel eingesetzt werden. Ein typisches Lösemittel für diesen Zweck ist beispielsweise n-Butylacetat, welches auch bei der Herstellung der hydroxyfunktionellen Poly(meth)acrylate verwendet werden kann. Sollte das hydroxyfunktionelle Poly(meth)acrylat in einem Lösemittel eingesetzt werden, wird das Lösemittel dem Lösungsmittel L zugerechnet.

Bevorzugt wird das hydroxyfunktionelle Poly(meth)acrylat in einer bestimmten Gesamtmenge eingesetzt. Es ist daher erfindungsgemäß vorteilhaft, wenn das hydroxyfunktionelle Poly(meth)acrylat in einer Gesamtmenge von 10 Gew.-% bis 97 Gew.-%, vorzugsweise von 40 bis 70 Gew.-%, insbesondere von 40 bis 50 Gew.-%, jeweils bezogen auf das Gesamtgewicht des Festkörpers aller in der Zusammensetzung enthaltenen Bindemittel, enthalten ist.

Vorzugsweise weist das Polyesterpolyol eine Hydroxylzahl von 100 bis 200 mg KOH/g, bevorzugt von 110 bis 180 mg KOH/g, besonders bevorzugt von 120 bis 160 mg KOH/g, jeweils bezogen auf den Feststoffgehalt, auf.

Die Säurezahl des Polyesterpolyols beträgt vorzugsweise 0 bis 9 mg KOH/g, insbesondere 0,2 bis 2 mg KOH/g, jeweils bezogen auf den Feststoffgehalt. Die Bestimmung der Hydroxyl- sowie Säurezahl des Polyesterpolyols kann wie zuvor im Zusammenhang mit dem hydroxyfunktionellen Poly(meth)acrylat erfolgen.

Das zahlenmittlere Molekulargewicht des Polyesterpolyols liegt vorzugsweise im Bereich von 800 bis 3.000 g/mol, besonders bevorzugt 1.000 bis 2.000 g/mol ganz besonders bevorzugt 1.000 bis 1.600 g/mol. Die Bestimmung erfolgt hierbei wie im Zusammenhang mit der Bestimmung des Molekulargewichts für das hydroxyfunktionelle Poly(meth)acrylat.

Vorzugsweise ist das Polyesterpolyol verzweigt.

Bevorzugt besitzt das Polyesterpolyol eine Hydroxyfunktionalität von 2,2 bis 4, besonders bevorzugt von 2,5 bis 3,5, ganz besonders bevorzugt von 2,7 bis 3,3.

Bevorzugt wird das Polyesterpolyol in einer bestimmten Gesamtmenge eingesetzt. Es ist daher erfindungsgemäß vorteilhaft, wenn das Polyester-Polyol in einer Gesamtmenge von 40 Gew.-% bis 97 Gew.-%, vorzugsweise von 40 bis 70 Gew.-%, insbesondere von 50 bis 65 Gew.-%, jeweils bezogen auf das Gesamtgewicht des Festkörpers aller in der Zusammensetzung enthaltenen Bindemittel, enthalten ist.

Das Bindemittel B kann alternativ ausgewählt sein aus wässrigen anionisch stabilisierten Polyurethan-Dispersionen, wässrigen kationisch stabilisierten Polyurethan-Dispersionen, wässrigen Polyurethan-Polyharnstoff-Dispersionen sowie deren Mischungen. Geeignete Dispersionen sind beispielsweise in den Offenlegungsschriften EP 2 066 712 A1, EP 1 153 054 A1 sowie EP 1 153 052 A1 beschrieben.

### Vernetzungsmittel V (f):

Erfindungsgemäß enthält die Zusammensetzung neben den zuvor genannten Bestandteilen weiterhin ein Vernetzungsmittel V.

Bevorzugt ist das Vernetzungsmittel V ausgewählt aus der Gruppen bestehend aus Aminoplast-Harzen, Polyisocyanaten, blockierten Polyisocyanaten, Polycarbodiimiden, UV-Licht, Wärme, Photoinitiatoren sowie deren Mischungen.

Besonders bevorzugt werden Polyisocyanate sowie Polycarbodiimide als Vernetzungsmittel V eingesetzt.

Der Einsatz von Polyisocyanaten hat sich insbesondere dann bewährt, wenn als Bindemittel B eine Mischung des zuvor beschriebenen mindestens einen hydroxyfunktionellen Poly(meth)acrylats sowie des mindestens einen PolyesterPolyols in der erfindungsgemäßen Zusammensetzung enthalten ist.

In diesem Zusammenhang ist es besonders bevorzugt, wenn das Polyisocyanat eine NCO-Gruppenfunktionalität von größer 2,4 bis 5, vorzugsweise 2,6 bis 4, besonders bevorzugt 2,8 bis 3,6 besitzt.

Besonders bevorzugt werden im Rahmen der vorliegenden Erfindung Polyisocyanate eingesetzt, welche mindestens einen Isocyanurat-Ring oder mindestens einen Iminooxadiazindion-Ring enthalten.

Gemäß einer alternativen Ausführungsform können als Vernetzungsmittel V zwei voneinander verschiedene Polyisocyanate enthalten sein, wobei das erste Polyisocyanat mindestens einen Isocyanurat-Ring und das zweite Polyisocyanat mindestens einen Iminooxadiazindion-Ring enthält.

Bei dem Polyisocyanat handelt es sich vorzugsweise um Oligomere, vorzugsweise Trimere oder Tetramere von Diisocyanaten. Besonders bevorzugt handelt es sich um Iminooxadiazindione, Isocyanurate, Allophanate und/oder Biurete von Diisocyanaten. Besonders bevorzugt handelt es sich bei dem Polyisocyanat um aliphatische und/oder cycloaliphatische, ganz besonders bevorzugt aliphatische Polyisocyanate. Besonders bevorzugt dienen Hexamethylendiisocyanat und/oder Isophorondiisocyanat, ganz besonders bevorzugt nur Hexamethylendiisocyanat als Diisocyanat-Basis der oben genannten Oligomere, insbesondere der oben genannten Tri- oder Tetramere.

Der Einsatz von Polycarbodiimiden hat sich insbesondere dann bewährt, wenn als Bindemittel B wässrige anionisch stabilisierte Polyurethan-Dispersionen, wässrige kationisch stabilisierte Polyurethan-Dispersionen, wässrige Polyurethan-Polyharnstoff-Dispersionen sowie deren Mischungen in der erfindungsgemäßen Zusammensetzung enthalten sind.

Bevorzugt liegen die Polycarbodiimide als wässrige Dispersion vor. Besonders bevorzugt eingesetzte Polycarbodiimide sind erhältlich durch Umsetzung von Polyisocyanaten mit Polycarbodiimiden und anschließender Kettenverlängerung und/oder Terminierung mittels hydrophilen Verbindungen, enthaltend Hydroxyl- und/oder Amingruppen. Geeignete Dispersionen sind beispielsweise in den Offenlegungsschriften EP1644428 A2 und EP1981922 A2 beschrieben.

Durch das Vernetzungsmittel V lässt sich beispielsweise die Härte, Flexibilität und Elastizität der resultierenden gehärteten Beschichtung beeinflussen. Insbesondere die Verwendung Iminooxadiazindion-Strukturen enthaltender Polyisocyanate führt zu Beschichtungen mit besonderer Härte, wodurch verhindert wird, dass sich Substratstrukturen bis zur gehärteten Beschichtungsoberfläche fortpflanzen und dort eine unerwünschte Welligkeit auftritt. Derartige Polyisocyanate sind beispielsweise von der Firma Covestro unter der Bezeichnung Desmodur N3900 erhältlich. Ähnliche Resultate können mit Isocyanurat-Strukturen enthaltenden Polyisocyanaten, wie sie beispielsweise unter der Bezeichnung Desmodur N3800 von der Firma Covestro erhältlich sind, erreicht werden, wobei die Beschichtung weiterhin hart, jedoch flexibler ist.

Bevorzugt enthält die Zusammensetzung das mindestens eine Vernetzungsmittel V in einer bestimmten Gesamtmenge. Es ist daher erfindungsgemäß bevorzugt, wenn das mindestens eine Vernetzungsmittel V in einer Gesamtmenge von 10 Gew.-% bis 40 Gew.-%, vorzugsweise von 10 bis 30 Gew.-%, insbesondere von 15 bis 25 Gew.-%, jeweils bezogen auf das Gesamtgewicht der Zusammensetzung, enthalten ist.

Weiterhin ist es bevorzugt, wenn die Zusammensetzung ein bestimmtes molares Verhältnis der funktionellen Gruppen des Vernetzungsmittels V zu den gegenüber dem Vernetzungsmittel V reaktiven Gruppen des Bindemittels B enthält. Hierdurch wird sichergestellt, dass eine ausreichende Vernetzung der erfindungsgemäßen Zusammensetzung erfolgt. Es ist daher vorteilhaft, wenn das molare Verhältnis der funktionellen Gruppen des Vernetzungsmittels V, insbesondere der NCO- oder Carbodiimid-Gruppen, zu der Summe der gegenüber den funktionellen Gruppen des Vernetzungsmittels V reaktiven Gruppen des mindestens einen Bindemittels B, insbesondere Hydroxylgruppen oder anionische Gruppen, 0,4:1 bis 1:1, bevorzugt 0,65:1 bis 0,85:1, insbesondere 0,7:1 bis 0,8:1 beträgt.

Je nachdem welche Bindemittel B und Vernetzungsmittel V in der erfindungsgemäßen Zusammensetzung enthalten sind, ist die erfindungsgemäße Zusammensetzung als Einkomponenten-System ausgestaltet oder erhältlich durch Vermischen von zwei (Zweikomponenten-System) oder mehr Komponenten (Mehrkomponenten-System).

In thermisch-chemisch härtbaren Einkomponenten-Systemen liegen die zu vernetzenden Komponenten, also Bindemittel und Vernetzungsmittel, nebeneinander, das heißt in einer Komponente, vor. Voraussetzung hierfür ist, dass die zu vernetzenden Komponenten erst bei höheren Temperaturen von beispielsweise über 100°C effektiv miteinander reagieren, um eine vorzeitige zumindest anteilige thermisch-chemische Härtung zu vermeiden. Als beispielhafte Kombination seien hydroxyfunktionelle Polyester und/oder Polyurethane mit Melaminharzen und/oder blockierten Polyisocyanaten als Vernetzungsmittel genannt.

In thermisch-chemisch härtbaren Zwei- oder Mehrkomponenten-Systemen liegen die zu vernetzenden Komponenten, also Bindemittel und die Vernetzungsmittel, getrennt voneinander in mindestens zwei Komponenten vor, welche erst kurz vor der Applikation zusammengegeben werden. Diese Form wird dann gewählt, wenn die zu vernetzenden Komponenten bereits bei Umgebungstemperaturen oder leicht erhöhten Temperaturen von beispielsweise 40 bis 90°C effektiv miteinander reagieren. Als beispielhafte Kombination seien hydroxyfunktionelle Polyester und/oder Polyurethane und/oder Poly(meth)acrylate mit freien Polyisocyanaten als Vernetzungsmittel genannt.

Ist die erfindungsgemäße Zusammensetzung erhältlich durch Vermischen von zwei oder mehr Komponenten, so beträgt das Gewichtsverhältnis der Bindemittel-haltigen Komponente zu der Vernetzer-haltigen Komponente bevorzugt 100 : 10 bis 100 : 100, vorzugsweise von 100 : 20 bis 100 : 80, insbesondere von 100 : 50 bis 100 : 70. Die Verwendung der zuvor beschriebenen Gewichtsverhältnisse stellt eine ausreichende Vernetzung der Zusammensetzung sicher und gewährleistet auf diese Weise eine gute Entformbarkeit sowie eine hohe Haftung auf der Oberfläche des hergestellten Bauteils.

### Vernetzungskatalysator VK (g):

Weiterhin kann es erfindungsgemäß vorteilhaft sein, wenn die Zusammensetzung mindestens einen Vernetzungskatalysator VK enthält. Der Vernetzungskatalysator VK ist insbesondere dann enthalten, wenn die Zusammensetzung mindestens ein Vernetzungsmittel V, insbesondere Polyisocyanate, enthält.

Der Vernetzungskatalysator VK dient in erster Linie der Katalyse der Reaktion zwischen den funktionellen Gruppen des Vernetzungsmittels V und den gegenüber den funktionellen Gruppen des Vernetzungsmittels V reaktiven Gruppen des mindestens einen Bindemittels B.

Der Vernetzungskatalysator wird bevorzugt gewählt aus der Gruppe der Bismutcarboxylate.

In diesem Zusammenhang ist es erfindungsgemäß bevorzugt, wenn spezielle Bismutcarboxylate enthalten sind. Die Bismutcarboxylate besitzen daher vorzugsweise die allgemeine Formel (III)

Bi[OOC(CₙH₂ₙ₊₁) ]₃ (III)

mit n = 5 bis 15, vorzugsweise n = 7 bis 13, insbesondere n = 9 bis 11.

Vorzugsweise sind die Carboxylat-Reste verzweigt und ganz besonders bevorzugt weisen diese in alpha-Position zum Kohlenstoffatom der Carboxylatgruppe ein tertiäres oder quaternäres, vorzugsweise quaternäres Kohlenstoffatom auf. Unter den Bismutcarboxylaten hat sich insbesondere Bismuttrineodecanoat als ganz besonders geeignet herausgestellt.

Die Bismutcarboxylate werden bevorzugt in Kombination mit der dem Carboxylat zugrundeliegenden Carbonsäure HOOC(CₙH₂ₙ₊₁) stabilisiert eingesetzt, worin n die oben angegebene Bedeutung besitzt. Die freie Carbonsäure ist dabei formell im Rahmen dieser Erfindung nicht als Bestandteil des Vernetzungskatalysators VK anzusehen, selbst wenn diese neben der Stabilisatorwirkung gegebenenfalls als Promotor der Katalyse dienen kann, sondern zählt zu den weiteren Additiven, wie sie unten beschrieben werden.

Bevorzugt enthält die Zusammensetzung den mindestens eine Vernetzungskatalysator VK in einer bestimmten Gesamtmenge. Es ist daher erfindungsgemäß bevorzugt, wenn den mindestens einen Vernetzungskatalysator VK in einer Gesamtmenge von 0,01 Gew.-% bis 3,5 Gew.-%, vorzugsweise von 0,1 bis 2 Gew.-%, insbesondere von 0,4 bis 1,5 Gew.-%, jeweils bezogen auf das Gesamtgewicht der Zusammensetzung, enthalten ist.

### Weitere Bestandteile (h):

Neben den zuvor angeführten Bestandteilen kann die erfindungsgemäße Zusammensetzung weitere Bestandteile enthalten. Beispiele für weitere Bestandteile sind Pigmente, Füllstoffe und Additive.

Bevorzugt enthält die Zusammensetzung zusätzlich mindestens ein Pigment und/oder mindestens einen Füllstoff. Der Einsatz von Pigmenten ist insbesondere dann vorteilhaft, wenn Bauteile mit farbigen Beschichtungen überzogen werden sollen. Überraschenderweise führt der Einsatz von Pigmenten in den erfindungsgemäßen Zusammensetzungen weder zu einem negativen Einfluss auf die Entformbarkeit, noch auf die Haftung der vernetzten Zusammensetzung auf dem Bauteil. Daher lassen sich mit der erfindungsgemäßen Zusammensetzung beschichtete Bauteile herstellen, welche bereits direkt nach der Herstellung die gewünschte Farbe aufweisen, so dass weitere Färbeschritte nach der Herstellung der Bauteile entfallen.

Bevorzugt ist das mindestens eine Pigment und/oder der mindestens eine Füllstoff in einer Gesamtmenge von 0 Gew.-% bis 10 Gew.-%, bezogen auf das Gesamtgewicht der Zusammensetzung, enthalten.

Neben oder zusätzlich zu dem mindestens einen Pigment und/oder Füllstoff kann die erfindungsgemäße Zusammensetzung weiterhin mindestens Additiv, ausgewählt aus der Gruppe bestehend aus Netz- und/oder Dispergiermitteln, Rheologiehilfsmitteln, Verlaufsmitteln, UV-Absorbern sowie deren Mischungen, enthalten.

Bevorzugt ist das mindestens eine Additiv in einer Gesamtmenge von 0 Gew.-% bis 10 Gew.-%, bezogen auf das Gesamtgewicht der Zusammensetzung, enthalten.

### Erfindungsgemäßes Verfahren:

Ein zweiter Gegenstand der vorliegenden Erfindung ist ein Verfahren zur Herstellung eines beschichteten Bauteils, wobei
(A) eine erfindungsgemäße Zusammensetzung auf eine Oberfläche eines Formwerkzeugs unter Bildung einer Beschichtungsmittelschicht appliziert wird,
(B) die Beschichtungsmittelschicht abgelüftet wird,
(C) eine das Bauteil bildende Zusammensetzung auf die abgelüftete Beschichtungsmittelschicht appliziert wird,
(D) die Zusammensetzung und die Beschichtungsmittelschicht vernetzt werden und
(E) anschließend das beschichtete Bauteil entnommen wird.

Bevorzugt handelt es sich bei dem Bauteil um ein Bauteil aus Schaumstoff. Zu den Schaumstoffen zählen hierin unter anderem elastomere Schaumstoffe, insbesondere Weichschaumstoffe, aber auch duroplastische Schaumstoffe, insbesondere Hartschaumstoffe.

Die Schaumstoffe können offenzellig, geschlossenzellig oder gemischtzellig sein. Auch sogenannte Integralschaumstoffe werden hierin zu den Schaumstoffen gezählt.

Besonders bevorzugte Schaumstoffe sind Polyurethanschaumstoffe. Diese werden üblicherweise aus einem oder mehreren Polyolen und einem oder mehreren Polyisocyanaten hergestellt. Als Treibmittel zur Schaumbildung wird der Polyolkomponente zumeist Wasser zugegeben, welches mit einem Teil des Polyisocyanats unter Kohlendioxidbildung, und somit unter Aufschäumung reagiert. Unter Verwendung langkettiger Polyole werden weiche bis elastischer Schaumstoffe, insbesondere Weichschaumstoffe, erhalten. Werden kurzkettige Polyole verwendet, so entstehen in der Regel stark vernetzte Strukturen, was in der Regel zur Bildung von Hartschaumstoffen führt. Die zur Herstellung der Polyurethanschaumstoffe verwendeten Polyole umfassen vorzugsweise Polyesterpolyole, Polyetherpolyole und/oder Polyester-Polyether-Polyole und werden entsprechend bevorzugt aus der Gruppe der vorgenannten Polyole gewählt.

Den Schaumstoff-Formulierungen können auch Fasern zugemischt werden. Werden solche Formulierungen aufgeschäumt, so entstehen sogenannte faserverstärkte Schaumstoffe. Fasern werden vorzugsweise bei der Herstellung von Hartschäumen eingesetzt.

Die Beschichtung der Bauteile, insbesondere Schaumstoffe, erfolgt bei der Ausbildung der Bauteile. Hierzu wird zunächst in Verfahrensschritt (A) die erfindungsgemäße Zusammensetzung auf alle Oberflächen eines Formwerkzeugs, vorzugsweise im Spritz- oder Sprühauftrag, beispielsweise pneumatisch oder elektrostatisch, aufgetragen. Falls es sich bei der erfindungsgemäßen Zusammensetzung um eine Zweikomponenten-Zusammensetzung handelt, kann es vorgesehen sein, dass die beiden Komponenten über getrennte Zuführungen dem Formwerkzeug zugeführt werden. Vorzugsweise besitzen die beiden Komponenten bei der Zuführung Temperaturen zwischen 15 und 70 °C, besonders bevorzugt 15 bis 40 °C, insbesondere 20 bis 30 °C. Die Zuführung kann unter Druck erfolgen.

In Verfahrensschritt (B) wird die gebildete Beschichtungsmittelschicht abgelüftet. Die Ablüftdauer beträgt vorzugsweise weniger als 2 min, besonders bevorzugt weniger als 1 min und ganz besonders bevorzugt weniger als 30 s. Hierbei ist es vorteilhaft, wenn das Formwerkzeug eine Temperatur von 20 bis 100 °C, besonders bevorzugt 30 bis 90 °C, ganz besonders bevorzugt 40 bis 80 °C, insbesondere 50 bis 70 °C besitzt. Vorzugsweise beträgt die Trockenschichtdicke 20 bis 120 µm, besonders bevorzugt 25 bis 100 µm. Während der Ablüftphase wird das Lösungsmittel L aus der Zusammensetzung entfernt, es erfolgt jedoch keine vollständige Aushärtung bzw. Vernetzung der Zusammensetzung.

In Verfahrensschritt (C) wird eine das Bauteil bildende Zusammensetzung auf die abgelüftete Beschichtungsmittelschicht gespritzt. Dies kann in einem offenen oder geschlossenen Verfahren erfolgen. Beim offenen Verfahren wird eine sogenannte Hinterspritzung mit formgebendem Material durchgeführt. Beim bevorzugten geschlossenen Verfahren wird das Formwerkzeug nach erfolgtem Ablüften der Beschichtungsmittelschicht geschlossen, bevor anschließend die Zusammensetzung zur Ausbildung des Bauteils vorzugsweise durch Injektion eingeführt wird.

In Verfahrensschritt (D) erfolgt die Vernetzung der Beschichtungsmittelschicht sowie der das Bauteil bildenden Zusammensetzung. Die Reaktionsdauer variiert in der Regel im Bereich von 1 bis 8 min, typischerweise 2 bis 6 min, bei einer Temperatur des Formwerkzeugs im Bereich von vorzugsweise 45 bis 75 °C, besonders bevorzugt 50 bis 70 °C, ganz besonders bevorzugt 52 bis 65 °C.

Nach erfolgter Reaktion unter Ausbildung des Bauteils und Härtung der Beschichtung ist das gebildete Bauteil mit einer Beschichtung aus der vernetzten erfindungsgemäßen Zusammensetzung beschichtet und kann in Verfahrensschritt (E) aus dem Formwerkzeug entnommen werden.

Die beschichteten Bauteile lassen sich in vielen Bereichen einsetzen. So beispielsweise im Innen- und Außenbereich von Kraftfahrzeugen, insbesondere als Sitzpolster oder als Kotflügel, Lenkrad, Schweller- oder Stoßfängerverkleidungen, aber auch als Schuhsohlen, oder im Bereich der Möbel und Möbelpolsterungen.

Das beschichtete Bauteil kann, wenn gewünscht, ohne Schleifvorgang, gegebenenfalls nach einer einfachen Reinigung, direkt mit weiteren Beschichtungsmitteln wie beispielsweise einem oder mehreren Basislacken und/oder einem oder mehreren Klarlacken unter Ausbildung einer oder mehrerer Basislackschichten und/oder einer oder mehrerer Klarlackschichten beschichtet werden. Vorzugsweise wird auf das erfindungsgemäß beschichtete Bauteil keine Füllerschicht aufgebracht, sondern direkt eine Basislackschicht und/oder eine Decklackschicht, insbesondere eine Klarlackschicht. Als Basislacke und Decklacke, insbesondere Klarlacke können prinzipiell alle konventionell in der Serienlackierung oder Reparaturlackierung eingesetzten Basislacke beziehungsweise Klarlacke verwendet werden. Derartige Basislacke und Klarlacke sind beispielsweise von der BASF Coatings GmbH erhältlich, wobei sich als Klarlacke insbesondere Klarlacke der EverGloss-Produktlinie besonders bewährt haben.

In Bezug auf weitere bevorzugte Ausführungsformen des erfindungsgemäßen Verfahrens, insbesondere in Bezug auf die in dem Verfahren verwendete Zusammensetzung, gilt mutatis mutandis das zu der erfindungsgemäßen Zusammensetzung Gesagte.

### Erfindungsgemäße Verwendung:

Schließlich ist ein weiterer Gegenstand der vorliegenden Erfindung die Verwendung der erfindungsgemäßen Zusammensetzungen zur Herstellung beschichteter Bauteile, insbesondere beschichteter Schaumstoffe.

Die erfindungsgemäße Zusammensetzung sowie deren Verwendung in dem erfindungsgemäßen Verfahren erlaubt die Herstellung von beschichteten Bauteilen, welche ohne aufwände Nachbehandlung weiterverarbeitet werden können. Auch ohne Nachbeschichtung ist die durch die Zusammensetzung auf dem Bauteil erhaltene Beschichtung hochelastisch bzw. flexibel sowie UV-beständig und nicht glänzend, so dass nicht nur eine beschädigungsfreie Entformung des beschichteten Bauteils, sondern auch ein effektiver Schutz des hergestellten beschichteten Bauteils gegen Umwelteinflüsse, wie UV-Strahlung, Schmutz oder dergleichen, bereits direkt nach der Herstellung des beschichteten Bauteils erreicht wird. Da die erfindungsgemäße Zusammensetzung gleichzeitig eine Trennwirkung aufweist, kann dieses Mittel sowohl als Trennmittel als auch als Beschichtungsmittel eingesetzt werden. Folglich ist der Einsatz eines separaten Trennmittels, welches vor Nachbehandlung des Bauteils aufwändig entfernt werden muss, nicht erforderlich. Weiterhin weisen die hergestellten beschichteten Bauteile selbst dann eine regelmäßige Oberfläche auf, wenn zu deren Herstellung Schäume verwendet werden, welche in Kombination mit herkömmlichen Trennmitteln zu Bauteilen mit sehr unregelmäßiger Oberfläche führen. Da nur geringe Rückstände der Zusammensetzung in dem Formwerkzeug verbleiben, müssen die verwendeten Formwerkzeuge nicht vor jeder erneuten Applikation der Zusammensetzung gereinigt werden.

### Beispiele

### Methodenbeschreibung:

### 1. Feststoffgehalt (Festkörper, nicht flüchtiger Anteil)

Die Bestimmung des nicht-flüchtigen Anteils erfolgt gemäß ASTM D2369 (Datum: 2015). Dabei werden 2 g Probe in eine vorher getrocknete Aluminiumschale eingewogen und 60 Minuten bei 110 °C im Trockenschrank getrocknet, im Exsikkator abgekühlt, und dann zurückgewogen. Der Rückstand bezogen auf die Gesamtmenge der eingesetzten Probe entspricht dem nichtflüchtigen Anteil.

### 2. Bestimmung der Entformungsenergie

Hierbei wird ein Klebestreifen (TESA 4651, siehe Datenblatt Tesa) mit den Maßen von 2,5 x 4 cm auf die Oberseite eines Formwerkzeugs geklebt. An einem Ende wird im Vorfeld das Klebeband einmal umgeklappt um eine Lasche zu haben, durch welche ein Loch gebohrt wird. In diesem Loch wird die Federwaage eingehängt. Mit einem Skalpell wird rings um das Klebeband der Lackfilm durchschnitten, so dass eine definierte Fläche von 10 cm² vorlag. Abzugsrichtung ist orthogonal zum Formwerkzeug.

### 3. Weiterverarbeitbarkeit

Die jeweilige Trennmittelzusammensetzung wurde auf ein 55°C warme Oberfläche eines Formwerkzeugs appliziert. Direkt nach Beendigung der Applikation wurde im 5-Sekundentakt möglichst gleichmäßig/mit gleichbleibendem Druck eine Fingerspitze in die flüssigen Trennmittelzusammensetzung getippt. Die jeweilige Trennmittelzusammensetzung war weiterverarbeitbar, sobald diese vollständig getrocknet war, sich jedoch nicht vom Formwerkzeug ablösen ließ.

### 4. Bestimmung der Säurezahl

Die Bestimmung der Säurezahl erfolgt gemäß DIN EN ISO 2114 (Datum: Juni 2002), wobei "Verfahren A" eingesetzt wird. Die Säurezahl entspricht der Masse an Kaliumhydroxid in mg, welche zur Neutralisation von 1 g Probe unter den in der DIN EN ISO 2114 festgelegten Bedingungen erforderlich ist. Die angegebene Säure-Zahl entspricht dabei der in der DIN-Norm angegebenen Gesamtsäurezahl und ist bezogen auf den Feststoffgehalt.

### 5. Bestimmung der OH-Zahl

Die Bestimmung der OH-Zahl erfolgt nach DIN 53240-2 (Datum: Juni 2002), wobei "Verfahren A" eingesetzt wird. Dabei werden die OH-Gruppen durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1 g Probe gebundenen Menge an Essigsäure äquivalent ist. Die OH-Zahl ist auf den Feststoffgehalt der Probe bezogen.

### 6. Bestimmung des zahlen- und gewichtsmittleren Molekulargewichts

Die Bestimmung des zahlenmittleren Molekulargewichts (Mₙ) erfolgt mittels Gelpermeationschromatographie (GPC) gemäß DIN 55672-1 (März 2016). Neben dem zahlenmittleren Molekulargewicht können mit dieser Methode zudem das gewichtsmittlere Molekulargewicht (M_{w}) sowie die Polydispersität d (Verhältnis von gewichtsmittlerem Molekulargewicht (M_{w}) zu zahlenmittlerem Molekulargewicht (Mₙ)) bestimmt werden. Als Eluent wird Tetrahydrofuran eingesetzt. Die Bestimmung erfolgt gegen Polystyrol-Standards. Das Säulenmaterial besteht aus Styrol-Divinylbenzol-Copolymeren.

### Ausführungsbeispiele

Die nachfolgenden Beispiele und Vergleichsbeispiele dienen der Erläuterung der Erfindung, sind jedoch nicht einschränkend auszulegen.

Hinsichtlich der angegebenen Formulierungsbestandteile und deren Mengen ist folgendes zu berücksichtigen. Wird auf ein Handelsprodukt verwiesen, ist unabhängig von der jeweils gewählten Hauptbenennung des Bestandteils genau dieses Handelsprodukt gemeint.

### 1. Eingesetzte Trennmittelzusammensetzungen

Die Beschichtungsmittelzusammensetzungen Z1 bis Z5 werden jeweils durch homogenes Vermischen der in Tabelle 1 angegebenen Bestandteile erhalten.

**Tabelle 1: verwendete Zusammensetzungen**

| | **Z1** | **Z2*** | **Z3** | **Z4*** | **Z5*** |
|---|---|---|---|---|---|
| Parocryl 4085¹⁾ | 108,9 | 201,5 | - | - | 50,38 |
| Desmophen 670 BA²⁾ | 108,9 | 201,5 | - | - | 352,62 |
| 1-Methoxy-2-proplyacetat | 201,1 | 213,0 | - | - | 213,0 |
| Additiv MI-8010³⁾ | - | 23,5 | - | 22,3 | 23,5 |
| Borchi Gol OL17⁴⁾ | - | 9,50 | - | 9,02 | 9,50 |
| Silmer OHT Di-10⁵⁾ | - | 4,50 | - | 4,27 | 4,50 |
| Tinuvin 1130⁶⁾ | 2,43 | 4,50 | - | - | 4,50 |
| Butylacetat | 15,7 | 29,0 | - | - | 29,0 |
| K-Kat XK-651⁷⁾ | 7,03 | 7,03 | - | - | 7,03 |
| Desmodur N 3800⁸⁾ | 154,0 | 154,0 | - | - | 154,0 |
| Permutex RP-39-525 ⁹⁾ | - | - | 763,2 | 727,6 | - |
| Permutex XR-5577 ¹⁰⁾ | - | - | 84,8 | 84,8 | - |

| | | | | | |
|---|---|---|---|---|---|
| *erfindungsgemäß ¹⁾ hydroxyfunktionelles Poly(meth)acrylat mit einer Hydroxylzahl von 82,5 mg KOH/g, einer Säurezahl von 10 mg KOH/g, Mₙ ca. 6.800 g/mol, M_{w} ca. 17.000 g/mol (BASF SE), ²⁾ Polyesterpolyol mit einer Hydroxylzahl von 115 mg KOH/g und einer Hydroxylfunktionalität von ca. 3,5 (Covestro), ³⁾ Mischung von Verbindungen der Formel R¹-(C=O)ᵣ-O-(AO)ₛ-R² aus (a) R¹ = Mischung gesättigter und ungesättigter Kohlenwasserstoffreste mit 12 bis 22 Kohlenstoffatomen, r = 0, AO = Mischung aus hauptsächlich Ethylenoxid- und wenig Propylenoxid-Einheiten und R² = H (Mₙ ≈ 650 g/mol); und (b) R¹ = ungesättigter Kohlenwasserstoffrest mit 21 Kohlenstoffatomen, s = 0 und R² = H (Münch Chemie International GmbH), ⁴⁾ polyethermodifiziertes Methylpolysiloxan (Borchers GmbH), ⁵⁾ Hydroxymodifiziertes Polysiloxan der Formel (II) mit den zuvor angeführten Resten (Siltec GmbH & Co. KG), ⁶⁾ UV-Absorber (BASF Corporation) ⁷⁾ Bismutneodecanoat (King Industries) ⁸⁾ Hexamethylendiisocyanat-Trimer des Isocyanurat-Typs mit einem NCO-Gehalt von 11,0 Gew.-% (Covestro) ⁹⁾ wässrige Polyurethandispersion (Firma Stahl Holdings B.V.) ¹⁰⁾ wässrige Dispersion eines Polycarbodiimids (Firma Stahl Holdings B.V.) | | | | | |

### 2. Bestimmung der Haftkraft der Trennmittelzusammensetzung auf der Oberfläche eines Formwerkzeugs

Die Bestimmung der Haftkraft erfolgt wie zuvor beschrieben. Die Ergebnisse sind in Tabelle 2 wiedergegeben.

**Tabelle 2: Haftkraft der Zusammensetzungen auf einem Formwerkzeug**

| | **Haftkraft [N]** |
|---|---|
| Z1 | 5** |
| Wässriges Trennmittel WT¹⁾ + Z1 | 1,6 |
| Z2* | 0,5 |
| Wässriges Trennmittel WT ¹⁾ + Z2 | 0,15 |
| Z3 | 4,9 |
| Wässriges Trennmittel WT ¹⁾ + Z3 | 0,9 |
| Z4* | 0,6 |
| Wässriges Trennmittel WT ¹⁾ + Z4 | 0,1 |

| | |
|---|---|
| *erfindungsgemäß **Delamination ¹⁾ Acmosil 36-5645-19 (Emulsion von Polysiloxanen und andere Wirkstoffen in Wasser) | |

Die nicht erfindungsgemäße Zusammensetzung Z1 konnte nicht vom Formwerkzeug getrennt werden, da das Klebeband bei 5 Newton delaminierte. Wurde vor Auftragung der Zusammensetzung Z1 zusätzlich ein externes Trennmittel (wässriges Trennmittel WT) aufgetragen, so verbesserte sich die Enttrennbarkeit deutlich. Die erfindungsgemäßen Zusammensetzungen Z2 und Z4 weisen auch ohne Verwendung eines zusätzlichen externen Trennmittels eine gute Entformbarkeit auf, wobei sogar eine bessere Entformbarkeit erreicht wird als bei Kombination der Zusammensetzungen Z1 und Z3 mit dem externen Trennmittel (WT). Die Entformbarkeit der erfindungsgemäßen Zusammensetzungen Z2 und Z4 kann durch Verwendung eines zusätzlichen externen Trennmittels (wässriges Trennmittel WT) weitergehend verbessert werden.

### 3. Bestimmung der Weiterverarbeitungszeit

Die Bestimmung der Weiterverarbeitungszeit erfolgt wie zuvor beschrieben. Die Ergebnisse sind in Tabelle 3 wiedergegeben.

**Tabelle 3: Weiterverarbeitungszeit der Trennmittelzusammensetzungen**

| | **Weiterverarbeitungszeit [s]** |
|---|---|
| Z1 | 30 |
| Z2* | 25 |
| Z3 | 85 |
| Z4* | 30 |

| | |
|---|---|
| * erfindungsgemäß | |

Aus Tabelle 3 geht hervor, dass die erfindungsgemäßen Zusammensetzungen Z2 und Z4 eine geringere Ablüftzeit aufweisen, als die nicht erfindungsgemäßen Zusammensetzungen Z1 und Z3. Diese geringen Ablüftzeiten erlauben kurze Prozesszeiten des Verfahrensschritts (B) und somit eine effiziente Verfahrensführung.

### 4. Herstellung und Prüfung beschichteter Bauteile

### 4.1 Herstellung beschichteter Bauteile

Die erfindungsgemäßen Beschichtungsmittelzusammensetzungen Z2 sowie Z5, welche zusätzlich jeweils ein Farbpigment in einer Menge von 0,8 Gew.-% (bezogen auf das Gesamtgewicht der Zusammensetzung) enthalten, wurden jeweils manuell pneumatisch (SATA Jet 4000 B HVLP mit 1,0er Düse) auf die Oberfläche eines Formwerkzeugs in Plattenform appliziert (die Form besteht aus einer Aluminiumlegierung; Plattengröße: 200 mm x 200 mm x 20 mm, unstrukturiert). Die Formtemperatur betrug 55°C bzw. 65 °C. Anschließend wurde die Beschichtungsmittelschichten abgelüftet (Ablüftdauer: 20 bis 25 s; Trockenschichtdicke: ca. 80 µm (lichtmikroskopisch)).

Nach dem Ablüften wurden die Formwerkzeuge geschlossen und es wurde ein polyesterbasiertes Polyurethan-Schaumsystem eingespritzt. Dieses System ist erhältlich durch Vermischen einer A-Komponente (enthält 100 Gew.-% Polyol mixture 270/40¹⁾ sowie 10,6 Gew.-% Katalysator Catalyst Elastopan S 7429/155²⁾) mit einer B-Komponente (enthält Iso 187/68³⁾) im Verhältnis 100:84. Die Schaumdichte beträgt 280 bis 320 kg/m³.
¹ Polyesterpolyol-Mischung mit einer OH-Zahl von 51 mg KOH/g (BASF Italia S.p.A)
² Isocyanat auf Basis von 4,4'-Diphenylmethandiisocyanat mit einem NCO-Gehalt von 18,7 % (BASF Italia S.p.A.)
³ Mischung aliphatischer tertiärer Amine, Glykole und Stabilisatoren mit einem Wassergehalt von 3,9 Gew.-% (BASF Italia S.p.A.)

Die Härtung der Beschichtungsmittelschicht sowie die Ausbildung des Polyurethanschaums erfolgten über einen Zeitraum von 4 min in geschlossener Form bei 55°C bzw. 65 °C.

Nach Ablauf der 4-minütigen Härtungszeit, ließ sich der beschichtete Schaumstoff ohne Hilfsmittel, manuell, leicht und vollständig aus dem Werkzeug entnehmen. Die Oberfläche der Beschichtung erfüllte die in der Schuhindustrie geforderte Mattierung.

### 4.2 Rossflextest

Mit den zuvor herstellten Bauteilen wurde der Rossflextest gemäß ASTM D1052:2009 mit einem Biegewinkel von 60° durchgeführt. Der Test wurde jeweils über 100.000 Zyklen durchgeführt, wobei die Bauteile nach 50.000 Zyklen und anschließend jeweils nach 10.000 Zyklen visuell auf das Vorliegen von Verletzungen der Oberfläche der Beschichtung untersucht wurden.

Selbst nach 100.000 Zyklen wiesen die mit den erfindungsgemäßen Zusammensetzungen Z2 und Z5 beschichten Bauteile keine Verletzungen der Oberfläche auf. Die mit den Zusammensetzungen erzielten Beschichtungen führen demnach nicht nur zu einer hervorragenden Entformbarkeit der Bauteile nach deren Herstellung, sondern weisen auch eine hohe Haftung auf den Bauteilen sowie eine hohe Flexibilität auf.

### 4.3 Reibechtheit

Die Reibechtheit des mit der erfindungsgemäßen Zusammensetzung Z2 hergestellten Bauteiles wurde anhand der DIN EN ISO 11640:2017-05 geprüft. Hierzu wurde das Bauteil in ein Crockmeter der Fa. SDL Atlas eingespannt. Auf die lackierte Seite des Bauteils wurde mit einer Anpresskraft von 9 N über 25 Doppelhübe mit einer Hublänge von 5 cm ein handelsübliches Schleifpapier mit P280er Körnung gerieben. Anschließend wurde der farbige Rückstand auf dem Schleifpapier sowie die Oberfläche der Beschichtung visuell beurteilt. Zwar wies das Schleifpapier geringe Rückstände der Beschichtung auf, jedoch wurde die Beschichtung nicht sichtbar verletzt. Das erfindungsgemäße Beschichtungsmittel führt demnach zu Beschichtungen, welche eine gute Reibechtheit aufweisen.

### 4.4 Migrationsechtheit

Zur Überprüfung des Migrationsverhaltens der Pigmente unter Druck wurde das Lacksystem 1-NOVO gemäß DIN EN ISO 15701:2015-07 untersucht. Dabei wurde auf die lackierte Seite des jeweiligen Bauteils eine PVC-Folie (nach EN ISO 15701) der Fa. James Heal gelegt. Bauteil und PVC-Folie wurden zwischen zwei Glasplatten in einem Perspirometer der Fa. James Heal eingespannt und mit einem Gewicht von 4,5 kg beschwert. Das Perspirometer wurde anschließend für 16 h bei 50 °C gelagert. Nach Ablauf der Lagerzeit wurde die Versuchsanordnung wieder auseinander gebaut und die PVC-Folie visuell auf Verfärbungen überprüft. Bei allen geprüften Bauteilen trat jeweils keine Verfärbung der PVC-Folie auf. Die beschichteten Bauteile besitzen daher eine hohe Migrationsechtheit.

### 4.5 Verträglichkeit

Zur Bestimmung der Verträglichkeit der Beschichtungsmittelzusammensetzungen mit zur Herstellung von Bauteilen verwendeten Schaumzusammensetzungen wurden Bauteile hergestellt, wie unter Punkt 4.1 beschrieben. Zur Herstellung der Bauteile wurden sowohl die erfindungsgemäße Trennmittelzusammensetzung Z2, ein wachsbasiertes Trennmittel (Münch Chemie) sowie ein silikonbasiertes Trennmittel (Münch Chemie) verwendet. Die Verträglichkeit des Trennmittels mit dem zur Herstellung des Bauteils verwendeten Schaumsystem wurde visuell beurteilt, wobei sich eine Unverträglichkeit durch Beulen und Dellen im Schaum wiederspiegelt. Es wurden die folgenden Ergebnisse erhalten (Note 1: sehr gute Verträglichkeit, Note 2: gute Verträglichkeit, Note 3: befriedigende Verträglichkeit, Note 4: ausreichende Verträglichkeit)

**Tabelle 4: Verträglichkeit der Trennmittelzusammensetzungen**

| **Trennmittelzusammensetzung** | **Verträglichkeit** |
|---|---|
| Z2* | 1 |
| wachsbasiertes Trennmittel | 3 |
| silikonbasiertes Trennmittel | 4 |

| | |
|---|---|
| * erfindungsgemäß | |

Aus Tabelle 4 geht hervor, dass die erfindungsgemäße Beschichtungsmittelzusammensetzung eine sehr gute Verträglichkeit mit dem zur Herstellung der Bauteile verwendeten Schaumsystem aufweist. Die unter Verwendung der erfindungsgemäßen Zusammensetzung Z2 hergestellten Bauteile weisen keinen Beulen oder Dellen auf. Hingegen führen die nicht erfindungsgemäßen Trennmittelzusammensetzungen zu Beulen und Dellen während der Herstellung der Bauteile und weisen daher nur eine befriedigende bzw. ausreichende Verträglichkeit auf.

### 4.6 Einfluss der Trennmittelzusammensetzung auf die Fließeigenschaften der zur Herstellung von Bauteilen verwendeten Zusammensetzung

Zur Bestimmung des Einflusses der Beschichtungsmittelzusammensetzungen auf die zur Herstellung von Bauteilen verwendeten Schaumzusammensetzungen wurden Bauteile hergestellt, wie unter Punkt 4.1 beschrieben. Zur Herstellung der Bauteile wurden sowohl die erfindungsgemäße Trennmittelzusammensetzung Z2 sowie ein wässriges Trennmittel (MP6032-5, Münch Chemie) verwendet. Als Formwerkzeuge wurde ein Formwerkzeug mit einfacher Geometrie in Plattenform, ein Formwerkzeug mit komplexerer Geometrie in Schuhsohlenform sowie ein Formwerkzeug mit verwinkelter Geometrie, welches nur wenige Millimeter breite Stege aufweist, verwendet. Sowohl die Entformung als auch die Ausfüllung des Formwerkzeugs durch das Schaumsystem wurde visuell beurteilt. Es wurden die folgenden Ergebnisse erhalten (Note 1: sehr gute Entformung bzw. sehr hohe Verbesserung der Fließeigenschaften, Note 2: gute Entformung bzw. hohe Verbesserung der Fließeigenschaften, Note 3: befriedigende Entformung bzw. geringe Defekte im Bauteil, Note 4: ausreichende Entformung bzw. hohe Anzahl an Defekten im Bauteil)

**Tabelle 5: Einfluss der Trennmittelzusammensetzungen auf die Fließeigenschaften des Schaumsystems**

| **Formwerkzeug** | **Trennmittelzusammen setzung** | **Entformbarkeit** | **Einfluss auf Fließeiqenschaften** |
|---|---|---|---|
| Plattenform | Z2* | 1 | 1 |
| | Wässriges Trennmittel | 1 | 1 |
| Schuhsohle | Z2* | 1-2 | 1 |
| | Wässriges Trennmittel | 2-3 | 2 |
| Verwinkelte Geometrie | Z2* | 2 | 1 |
| | Wässriges Trennmittel | 3-4 | 3 |

| | | | |
|---|---|---|---|
| * erfindungsgemäß | | | |

Aus Tabelle 5 geht hervor, dass die erfindungsgemäße Beschichtungsmittelzusammensetzung selbst dann zu einer hervorragenden Entformbarkeit führt, wenn Formwerkzeuge mit äußerst komplexer Geometrie verwendet werden. Zudem resultiert der Einsatz der erfindungsgemäßen Beschichtungsmittelzusammensetzung in einer verbesserten Fließeigenschaft des Schaumsystems, so dass auch enge Kavitäten des Formwerkzeugs vollständig mit der Schaumzusammensetzung gefüllt sind. Dies erlaubt die defektfreie Herstellung von Bauteilen mit komplexer Geometrie. Hingegen führt der Einsatz einer nichterfindungsgemäßen Trennmittelzusammensetzung bei komplexeren Formwerkzeugen zu einer schlechteren Entformbarkeit. Weiterhin führt der Einsatz der nichterfindungsgemäßen Trennmittelzusammensetzung nicht zu einem positiven Einfluss auf die Fließeigenschaften der Schaumzusammensetzung, so dass insbesondere bei komplexen Formwerkzeugen aufgrund der fehlenden Füllung von Kavitäten Defekte auftreten.

## Patentansprüche

1. Zusammensetzung, insbesondere Beschichtungsmittelzusammensetzung, umfassend
(a) mindestens ein Lösungsmittel L,
(b) mindestens eine Verbindung der allgemeinen Formel (I)
R¹-(C=O)ᵣ-O-(AO)ₛ-R² (I)
worin R¹ ein gesättigter oder ungesättigter, aliphatischer Kohlenwasserstoffrest mit 6 bis 30 Kohlenstoffatomen ist,
R² für H steht,
AO für einen oder mehrere Alkylenoxid-Reste gewählt aus der Gruppe bestehend aus Ethylenoxid, Propylenoxid und Butylenoxid steht,
r = 0 oder 1 ist, und s = 0 bis 30 ist;
(c) gegebenenfalls mindestens ein polyethermodifiziertes Alkylpolysiloxan
(d) mindestens ein Polysiloxan der allgemeinen Formel (II)
R³-Si(R⁴)₂-[O-Si(R⁴)(R⁵)]ₐ-[O-Si(R⁴)₂]_{b}-O-Si(R⁴)₂-R³ (II),
worin
R³ für einen Rest (HO-CH₂)₂-C(CH₂-CH₃)-CH₂-O-(CH₂)₃-* steht,
R⁴ für eine Methylgruppe steht,
R⁵ für eine Methylgruppe steht,
a für 0 steht und
b für 7 bis 14 und
(e) mindestens ein Bindemittel B,
wobei die Zusammensetzung zusätzlich mindestens ein Vernetzungsmittel V enthält.

2. Zusammensetzung nach Anspruch 1, **dadurch gekennzeichnet, dass** in der allgemeinen Formel (I) R¹ für einen gesättigten oder ungesättigten, aliphatischen Kohlenwasserstoffrest mit 10 bis 24 Kohlenstoffatomen steht, R² für H steht, AO für einen oder mehrere Alkylenoxid-Reste gewählt aus der Gruppe bestehend aus Ethylenoxid und Propylenoxid steht und der Ethylenoxidanteil an der Gesamtheit der Reste AO mindestens 70 mol-% beträgt, r = 0 oder 1 ist und s = 0 oder s = 6 bis 20 ist.

3. Zusammensetzung nach einem der Ansprüche 1 oder 2, **dadurch gekennzeichnet, dass** die mindestens eine Verbindung der allgemeinen Formel (I) in einer Gesamtmenge von 0,1 bis 10 Gew.-%, besonders bevorzugt 0,5 bis 5 Gew.-%, insbesondere 1,5 bis 4 Gew.-%, jeweils bezogen das Gesamtgewicht der Zusammensetzung, enthalten ist.

4. Zusammensetzung nach einem der vorangehenden Ansprüche, **dadurch gekennzeichnet, dass** das polyethermodifizierte Alkylpolysiloxan mindestens eine Struktureinheit (R⁷)₂(OR⁶)SiO_{1/2} und mindestens eine Struktureinheit (R⁷)₂SiO_{2/2}, wobei R⁶ für eine Ethylenoxid-, Propylenoxid- und Butylenoxidgruppe, insbesondere eine Mischung von Ethylenoxid- und Propylenoxid- und Butylenoxidgruppen und R⁷ für eine C₁-C₁₀-Alkylgruppe, insbesondere eine Methylgruppe, steht, umfasst.

5. Zusammensetzung nach einem der vorangehenden Ansprüche, **dadurch gekennzeichnet, dass** das mindestens eine polyethermodifizierte Alkylpolysiloxan in einer Gesamtmenge von 0 Gew.-% oder von 0,1 bis 6 Gew.-%, bevorzugt 0,5 bis 4 Gew.-%, insbesondere 0,8 bis 3 Gew.-%, jeweils bezogen auf das Gesamtgewicht der Zusammensetzung, enthalten ist.

6. Zusammensetzung nach einem der vorangehenden Ansprüche, **dadurch gekennzeichnet, dass** diese das mindestens eine Polysiloxan der allgemeinen Formel (II) in einer Gesamtmenge von 0,1 bis 5 Gew.-%, bevorzugt 0,5 bis 4 Gew.-%, insbesondere 0,8 bis 2,5 Gew.-%, jeweils bezogen auf das Gesamtgewicht der Zusammensetzung, enthält.

7. Zusammensetzung nach einem der vorangehenden Ansprüche, **dadurch gekennzeichnet, dass** das mindestens eine Bindemittel B in einer Gesamtmenge (Feststoffgehalt) von 20 bis 50 Gew.-%, vorzugsweise von 25 bis 40 Gew.-%, insbesondere von 25 bis 35 Gew.-%, jeweils bezogen auf das Gesamtgewicht der Zusammensetzung, enthalten ist.

8. Zusammensetzung nach einem der vorangehenden Ansprüche, **dadurch gekennzeichnet, dass** das Bindemittel B ausgewählt ist aus der Gruppe bestehend aus (i) Poly(meth)acrylaten, insbesondere hydroxyfunktionellen und/oder carboxylatfunktionellen und/oder aminfunktionellen Poly(meth)acrylaten, (ii) Polyurethanen, insbesondere hydroxyfunktionellen und/oder carboxylatfunktionellen und/oder aminfunktionellen Polyurethanen, (iii) Polyestern, insbesondere Polyesterpolyolen, (iv) Polyethern, insbesondere Polyetherpolyolen, (v) Mischpolymerisaten der genannten Polymere sowie (vi) deren Mischungen.

9. Zusammensetzung nach einem der vorangehenden Ansprüche, **dadurch gekennzeichnet, dass** das mindestens eine Vernetzungsmittel V in einer Gesamtmenge von 10 Gew.-% bis 40 Gew.-%, vorzugsweise von 10 bis 30 Gew.-%, insbesondere von 15 bis 25 Gew.-%, jeweils bezogen auf das Gesamtgewicht der Zusammensetzung, enthalten ist.

10. Zusammensetzung nach einem der vorangehenden Ansprüche, **dadurch gekennzeichnet, dass** diese zusätzlich mindestens einen Vernetzungskatalysator VK enthält.

11. Zusammensetzung nach Anspruch 10, **dadurch gekennzeichnet, dass** der mindestens eine Vernetzungskatalysator VK in einer Gesamtmenge von 0,01 Gew.-% bis 3,5 Gew.-%, vorzugsweise von 0,1 bis 2 Gew.-%, insbesondere von 0,4 bis 1,5 Gew.-%, jeweils bezogen auf das Gesamtgewicht der Zusammensetzung, enthalten ist.

12. Verfahren zur Herstellung eines beschichteten Bauteils, wobei
(A) eine Zusammensetzung gemäß einem der Ansprüche 1 bis 11 auf eine Oberfläche eines Formwerkzeugs unter Bildung einer Beschichtungsmittelschicht appliziert wird,
(B) die Beschichtungsmittelschicht abgelüftet wird,
(C) eine das Bauteil bildende Zusammensetzung auf die abgelüftete Beschichtungsmittelschicht appliziert wird,
(D) die Zusammensetzung und die Beschichtungsmittelschicht vernetzt werden und
(E) anschließend das beschichtete Bauteil entnommen wird.

13. Verwendung einer Zusammensetzung gemäß einer der Ansprüchen 1 bis 11 zur Herstellung beschichteter Bauteile, insbesondere beschichteter Schaumstoffe.

## Claims

1. Composition, more particularly coating material composition, comprising
(a) at least one solvent L,
(b) at least one compound of the general formula (I)
R¹-(C=O)ᵣ-O-(AO)ₛ-R² (I)
in which R¹ is a saturated or unsaturated, aliphatic hydrocarbon radical having 6 to 30 carbon atoms,
R² is H,
AO stands for one or more alkylene oxide radicals selected from the group consisting of ethylene oxide, propylene oxide and butylene oxide,
r is 0 or 1, and s is 0 to 30;
(c) optionally at least one polyether-modified alkylpolysiloxane,
(d) at least one polysiloxane of the general formula (II)
R³-Si(R⁴)₂-[O-Si(R⁴)(R⁵)ₐ-[O-Si(R⁴)₂]_{b}-O-Si(R⁴)₂-R³ (II) ,
in which
R³ is a (HO-CH₂)₂-C(CH₂-CH₃)-CH₂-O-(CH₂)₃-* radical,
R⁴ is a methyl group,
R⁵ is a methyl group,
a is 0, and
b is 7 to 14; and
(e) at least one binder B,
wherein the composition additionally comprises at least one crosslinking agent V.

2. Composition according to Claim 1, **characterized in that** in the general formula (I), R¹ is a saturated or unsaturated aliphatic hydrocarbon radical having 10 to 24 carbon atoms, R² is H, AO stands for one or more alkylene oxide radicals selected from the group consisting of ethylene oxide and propylene oxide, and the ethylene oxide fraction in the entirety of the radicals AO is at least 70 mol%, r is 0 or 1, and s is 0 or s is 6 to 20.

3. Composition according to either of Claims 1 and 2, **characterized in that** the at least one compound of the general formula (I) is present in a total amount of 0.1 to 10 wt%, more preferably 0.5 to 5 wt%, more particularly 1.5 to 4 wt%, based in each case on the total weight of the composition.

4. Composition according to any of the preceding claims, **characterized in that** the polyether-modified alkylpolysiloxane comprises at least one structural unit (R⁷)₂(OR⁶)SiO_{1/2} and at least one structural unit (R⁷)₂SiO_{2/2}, wherein R⁶ is an ethylene oxide, propylene oxide and butylene oxide group, more particularly a mixture of ethylene oxide and propylene oxide and butylene oxide groups, and R⁷ is a C₁-C₁₀ alkyl group, more particularly a methyl group.

5. Composition according to any of the preceding claims, **characterized in that** the at least one polyether-modified alkylpolysiloxane is present in a total amount of 0 wt% or of 0.1 to 6 wt%, preferably 0.5 to 4 wt%, more particularly 0.8 to 3 wt%, based in each case on the total weight of the composition.

6. Composition according to any of the preceding claims, **characterized in that** it comprises the at least one polysiloxane of the general formula (II) in a total amount of 0.1 to 5 wt%, preferably 0.5 to 4 wt%, more particularly 0.8 to 2.5 wt%, based in each case on the total weight of the composition.

7. Composition according to any of the preceding claims, **characterized in that** the at least one binder B is present in a total amount (solids content) of 20 to 50 wt%, preferably of 25 to 40 wt%, more particularly of 25 to 35 wt%, based in each case on the total weight of the composition.

8. Composition according to any of the preceding claims, **characterized in that** the binder B is selected from the group consisting of (i) poly(meth)acrylates, more particularly hydroxy-functional and/or carboxylate-functional and/or amine-functional poly(meth)acrylates, (ii) polyurethanes, more particularly hydroxy-functional and/or carboxylate-functional and/or amine-functional polyurethanes, (iii) polyesters, more particularly polyester polyols, (iv) polyethers, more particularly polyether polyols, (v) copolymers of the stated polymers, and (vi) mixtures thereof.

9. Composition according to any of the preceding claims, **characterized in that** the at least one crosslinking agent V is present in a total amount of 10 wt% to 40 wt%, preferably of 10 to 30 wt%, more particularly of 15 to 25 wt%, based in each case on the total weight of the composition.

10. Composition according to any of the preceding claims, **characterized in that** it additionally comprises at least one crosslinking catalyst VK.

11. Composition according to Claim 10, **characterized in that** the at least one crosslinking catalyst VK is present in a total amount of 0.01 wt% to 3.5 wt%, preferably of 0.1 to 2 wt%, more particularly of 0.4 to 1.5 wt%, based in each case on the total weight of the composition.

12. Process for producing a coated component, by
(A) applying a composition according to any of Claims 1 to 11 to a surface of a moulding tool to form a coating material film,
(B) flashing the coating material film,
(C) applying a composition forming the component to the flashed coating material film,
(D) crosslinking the composition and the coating material film, and
(E) subsequently removing the coated component.

13. Use of a composition according to any of Claims 1 to 11 for producing coated components, more particularly coated foams.

## Revendications

1. Composition, en particulier composition d'agent de revêtement, comprenant
(a) au moins un solvant L,
(b) au moins un composé de formule générale (I)
R¹-(C=O)ᵣ-O-(AO)ₛ-R² (I)
dans laquelle
R¹ représente un radical hydrocarboné aliphatique saturé ou insaturé, comprenant 6 à 30 atomes de carbone,
R² représente H,
AO représente un ou plusieurs radicaux oxyde d'alkylène, choisis dans le groupe constitué par l'oxyde d'éthylène, l'oxyde de propylène et l'oxyde de butylène,
r = 0 ou 1 et
s = 0 à 30 ;
(c) le cas échéant au moins un alkylpolysiloxane modifié par polyéther,
(d) au moins un polysiloxane de formule générale (II)
R³⁻Si(R⁴)₂[O-Si(R⁴)(R⁵)]ₐ-[O-Si(R⁴)₂]_{b}-O-Si(R⁴)₂-R³ (II),
dans laquelle
R³ représente un radical (HO-CH₂)₂-C(CH₂-CH₃)-CH₂-O-(CH₂)₃-*,
R⁴ représente un groupe méthyle,
R⁵ représente un groupe méthyle,
à représente 0 et
b représente 7 à 14 et
(e) au moins un liant B,
la composition contenant en outre au moins un réticulant V.

2. Composition selon la revendication 1, **caractérisée en ce que** dans la formule générale (I) R¹ représente un radical hydrocarboné aliphatique saturé ou insaturé comprenant 10 à 24 atomes de carbone, R² représente H, AO représente un ou plusieurs radicaux oxyde d'alkylène choisis dans le groupe constitué par l'oxyde d'éthylène et l'oxyde de propylène et la proportion d'oxyde d'éthylène par rapport à la totalité des radicaux AO étant d'au moins 70% en mole, r = 0 ou 1 et s = 0 ou s = 6 à 20.

3. Composition selon l'une des revendications 1 ou 2, **caractérisée en ce que** ledit au moins un composé de formule générale (I) est contenu en une quantité totale de 0,1 à 10% en poids, de manière particulièrement préférée de 0,5 à 5% en poids, en particulier de 1,5 à 4% en poids, à chaque fois par rapport au poids total de la composition.

4. Composition selon l'une des revendications précédentes, **caractérisée en ce que** l'alkylpolysiloxane modifié par polyéther comprend au moins un motif structural (R⁷)₂(OR⁶)SiO_{1/2} et au moins un motif structural (R⁷)₂SiO_{2/2}, R⁶ représentant un groupe oxyde d'éthylène, oxyde de propylène et oxyde de butylène, en particulier un mélange de groupes oxyde d'éthylène, oxyde de propylène et oxyde de butylène et R⁷ représentant un groupe C₁-C₁₀-alkyle, en particulier un groupe méthyle.

5. Composition selon l'une des revendications précédentes, **caractérisée en ce que** ledit au moins un alkylpolysiloxane modifié par polyéther est contenu en une quantité totale de 0% en poids ou de 0,1 à 6% en poids, de préférence de 0,5 à 4% en poids, en particulier de 0,8 à 3% en poids, à chaque fois par rapport au poids total de la composition.

6. Composition selon l'une des revendications précédentes, **caractérisée**
**en ce qu'**elle contient ledit au moins un polysiloxane de formule générale (II) en une quantité totale de 0,1 à 5% en poids, de préférence de 0,5 à 4% en poids, en particulier de 0,8 à 2,5% en poids, à chaque fois par rapport au poids total de la composition.

7. Composition selon l'une des revendications précédentes, **caractérisée en ce que** ledit au moins un liant B est contenu en une quantité totale (teneur en solides) de 20 à 50% en poids, de préférence de 25 à 40% en poids, en particulier de 25 à 35% en poids, à chaque fois par rapport au poids total de la composition.

8. Composition selon l'une des revendications précédentes, **caractérisée en ce que** le liant B est choisi dans le groupe constitué par (i) les poly(méth)acrylates, en particulier les poly(méth)acrylates à fonctionnalité hydroxy et/ou carboxylate et/ou amine, (ii) les polyuréthanes, en particulier les polyuréthanes à fonctionnalité hydroxy et/ou carboxylate et/ou amine, (iii) les polyesters, en particulier les polyesterpolyols, (iv) les polyéthers, en particulier les polyéther-polyols, (v) les copolymères des polymères mentionnés ainsi que (vi) leurs mélanges.

9. Composition selon l'une des revendications précédentes, **caractérisée en ce que** ledit au moins un réticulant V est contenu en une quantité totale de 10 à 40% en poids, de préférence de 10 à 30% en poids, en particulier de 15 à 25% en poids, à chaque fois par rapport au poids total de la composition.

10. Composition selon l'une des revendications précédentes, **caractérisée**
**en ce qu'**elle contient en outre au moins un catalyseur de réticulation VK.

11. Composition selon la revendication 10, **caractérisée en ce que** ledit au moins un catalyseur de réticulation VK est contenu en une quantité totale de 0,01% en poids à 3,5% en poids, de préférence de 0,1 à 2% en poids, en particulier de 0,4 à 1,5% en poids, à chaque fois par rapport au poids total de la composition.

12. Procédé pour la fabrication d'un composant revêtu,
(A) une composition selon l'une des revendications 1 à 11 étant appliquée sur une surface d'un outil de moulage avec formation d'une couche d'agent de revêtement,
(B) la couche d'agent de revêtement étant évaporée,
(C) une composition formant le composant étant appliquée sur la couche d'agent de revêtement évaporée,
(D) la composition et la couche d'agent de revêtement étant réticulées et
(E) le composant revêtu étant ensuite prélevé.

13. Utilisation d'une composition selon l'une des revendications 1 à 11 pour la fabrication de composants revêtus, en particulier de mousses revêtues.
